# EUROPEAN PATENT SPECIFICATION

(11) **EP 2 932 711 B1**
(45) Date of publication and mention of the grant of the patent: **08.02.2017**
(21) Application number: 13824382.9
(22) Date of filing: 12.12.2013
(51) Int. Cl.: H04N 13/00, H04N 19/50

(54) **APPARATUS AND METHOD FOR GENERATING AND REBUILDING A VIDEO STREAM**
VORRICHTUNG UND VERFAHREN ZUR ERZEUGUNG UND WIEDERHERSTELLUNG EINES VIDEODATENSTROMS
APPAREIL ET PROCÉDÉ PERMETTANT DE GÉNÉRER ET DE RECONSTRUIRE UN FLUX VIDÉO

(30) Priority: 13.12.2012 IT TO20121073
(43) Date of publication of application: 21.10.2015
(73) Proprietor: Rai Radiotelevisione Italiana S.p.A., 00195 Roma (IT); S.I.SV.EL. Società Italiana per lo Sviluppo dell'Elettronica S.p.A., 10060 None (TO) (IT)
(72) Inventor: CUCCA, Maria Giovanna, I-08022 Dorgali (NU) (IT)
(74) Representative: Baroni, Matteo
(86) International application number: PCT/IB2013/060856
(87) International publication number: WO 2014/091445

(56) References cited:
- WO-A1-2006/137000
- WO-A1-2010/037512
- WO-A2-2010/010077
- US-A1- 2012 293 504

## Description

### [FIELD OF THE INVENTION]

The present invention refers to an apparatus, a method and a software product for generating a video stream.

The present invention also refers to an apparatus, a method and a software product for rebuilding a video stream.

The present invention also refers to an electromagnetic signal incorporating a video stream generated by said apparatus, method or software product for generating a video stream.

### [PRIOR ART]

The diffusion of the 3D technology, after having been an exclusive protagonist in the cinemas, is gaining more and more ground also in the TV field as stereoscopic HD television based on the use of a couple of views, the right one and the left one, depicting what respectively perceived by the right eye and by the left eye in the binocular vision. The simplest technique for the distribution of the stereoscopic signal consists in the transmission of both the right view, and the left one (the so-called *simulcast*), however so doubling the used band. Such an increase of the used band is at least unwanted, as presently the frequency resources for TV transmission are now very limited.

To make up for such a drawback it is possible to resort to alternative approaches among which the *2D plus stereoscopic metadata* (2D plus stereoscopic metadata), allowing a Full HD display of the stereoscopic video, wherein "2D" intends to be one of the two views, and "*stereoscopic metadata*" intend the additional information allowing to depict the other view exploiting the correlation between the two views.

The definition *2D plus stereoscopic metadata* includes different approaches, each of them using different metadata to obtain the view which is not integrally transmitted:
a) *2D plus Difference*: it is computed and transmitted the difference between the two views;
b) *2D plus Depth*/*Disparity: it* is computed and transmitted the depth or disparity map obtained starting from the two views;
c) *2D plus Depth, Occlusion and Transparency (DOT):* they are computed and transmitted, besides the depth map, the not rebuildable parts through the last one.

There are many approaches for the transmission of the TV 3D which are different in what regards the bit-rate necessary for the view encoding; the best known of them are based on spatial arrangements of the two stereo views (*Side-by-Side, Top-and-Bottom* formats, etc.), use of the correlation between the views (*Multiview Video Coding or MVC* - *Stereo High Profile*), use of the depth map and of the occlusion map.

*Side-by-Side and Top-and-Bottom* allow to reuse the existing infrastructure HDTV, but do not allow a Full HD display for both eyes, because the two views are spatially arranged into a frame HDTV, with consequent horizontal or vertical halving of the native resolution.

The *Multiview Video Coding (MVC)* allows the use of a Full HD content for both eyes as the stereoscopic pair is transmitted using the correlation among the views, but does not allow a significant compression efficiency with respect to the *simulcast.*

The approach *2D plus Depth,* as said, provides the transmission of a view (2D signal, for instance the left view) and of the depth map computed starting from the two views.

The depth map depicts, in grey scale, the information providing the disparity between the two views, that is the distance in which the pixels of the regarded view (to be rebuilt on regeneration side) are located with respect to the reference one (i.e. that integrally transmitted). The conversion between disparity and depth occurs by means of an appropriate transform depending on the intrinsic parameters of the video-cameras, on the distance between the two video cameras, on the distance of the farthest scene plans and the nearest ones to the video-cameras. The rebuilding of one of the two views can occur using many techniques:
1) by moving the pixels of even value to the oddness, obtained from the depth map, starting from the view taken as reference;
2) by using so-called algorithms *3D warping* and *reverse 3D warping* for the projection of the real space coordinates of the pixels on those of the view synthesized through appropriate matrices. Said matrices are got from the parameters defining the position and the orientation of the camera with respect to the real system. The quality of the rebuilt view is closely related to the quality of the depth map.

The so rebuilt view is however not complete because of the so-called occlusions, that is parts of the background and/or objects present only in one of the two views. To overcome this problem then it becomes necessary to transmit also a map of the occlusions, in order to cover the not rebuilt pixels. Using this method there is however a resulting overall band occupation comprised between 180% and 220% with respect to a 2D Full HD stream with the same resolution and frame frequency, making very heavy the transmission and/or the storage of a 3D signal implemented in this way.

Document WO 2006/137000 A1 discloses a method of combined exchange of image data and further data being related to the image data, the image data being represented by a first two-dimensional matrix of image data elements and the further data being represented by a second two-dimensional matrix of further data elements is disclosed. The method comprises combining the first two-dimensional matrix and the second two-dimensional matrix into a combined two-dimensional matrix of data elements. Document WO 2010/010077 A2 discloses a device comprising means to generate a stream structured on several levels: a level 0 comprising two independent layers, a base layer containing the video data of the right image and a level 0 enhancement layer containing the video data of the left image, or conversely, a level 1 comprising two independent enhancement layers, a first level 1 enhancement layer containing a depth map relating to the image of the base layer, a second level 1 enhancement layer containing a depth map relating to the level 0 enhancement layer image, a level 2 comprising a level 2 enhancement layer containing occlusion data relating to the base layer image.

Document US 2012/293504 A1 discloses a three-dimensional (3D) image information transmitting system and method based on difference information. A 3D image information transmitting apparatus in the 3D image information transmitting system may include a difference information extractor to extract difference information by comparing a second composite texture image obtained by generating a composite of a first texture image and depth information with a second original texture image, and an image information transmitting unit to transmit 3D image information including the first texture image, the depth information, and the difference information.

Document WO 2010/037512 A1 discloses an intermediate view synthesis apparatus for synthesizing an intermediate view image from a first image corresponding to a first view and a second image corresponding to a second view different from the first view, the first and second images comprising depth information, wherein the second image is divided-up into a non-boundary portion, and a foreground/background boundary region, wherein the intermediate view synthesis apparatus is configured to project and merge the first image and the second image into the intermediate view to obtain an intermediate view image, with treating the foreground/background boundary region subordinated relative to the non-boundary portion. A multi-view data signal extraction apparatus for extracting a multiview data signal from a multi-view representation comprising a first image corresponding to a first view and a second image corresponding to a second view being different from the first view is also described, the first and second images comprising depth information. The multiview data signal extraction apparatus comprises means for detecting a foreground/background boundary in the second image; means for determining a left-away boundary portion along the foreground/background boundary; means for projecting the second image without the left-away boundary portion into the first view to obtain a projected version of the second image having a disoccluded area; and means for inserting the second image along with a portion of the first image, depending on a location of the disoccluded area within the projected version of the second image, into the multiview data signal.

### [SYNTHESIS OF THE INVENTION]

The invention is set out in the independent claims. Further advantageous embodiments of the invention are set out in the dependent claims.

It is an object of the present invention to depict a method, an apparatus and a software product solving some problems of the prior art.

Specifically, it is an object of the invention to provide a method, an apparatus and a software product allowing to generate a stereoscopic video stream, as well as an apparatus, a method and a software product allowing to rebuild a stereoscopic video stream, capable to restrict in significant way the band occupation in a transmit/receive step, and the occupation of memory places in storing step, without in the meantime reducing the quality of the same video stream.

A further object of the invention is to indicate a method, an apparatus and a processing software of a three dimensional video stream which is highly scalable with respect to the required complexity especially in the rebuilding side, whereby it is easily possible to rebuild a same stereoscopic 3D video stream entering in 2D mode with a simple change to the operating mode of the rebuilding apparatus.

A further object of the invention is to indicate a method, an apparatus and a generating and rebuilding software of a three dimensional video stream which is easily extendible from the case of a stereoscopic video stream, comprising two views, to so-called "multi-view" systems employing a view number greater than two.

These and also other objects are substantially met by a method, an apparatus and a generation software product, as well as by a method, an apparatus and a rebuilding software product, according to what is disclosed in the enclosed claims.

### [BRIEF DESCRIPTION OF THE DRAWINGS]

Further objects and advantages of the present invention will further appear from the detailed description of a preferred and not exclusive embodiment of the same invention.

Such a description is provided with reference to the enclosed drawings, just for exemplary purpose and so not restrictive, wherein:
- figure 1a shows a block diagram of a generating apparatus according to the present invention;
- figure 1b shows a block diagram of a rebuilding apparatus according to the present invention;
- figure 2 schematically shows a video stream used in the scope of the present invention;
- figure 3 shows a block diagram of a possible embodiment of a generator according to the present invention;
- figure 4a shows a block diagram of a possible embodiment of a rebuilding apparatus according to the present invention;
- figures 4b-4c schematically show two operating modes of the apparatus of figure 4a;
- figures 5a-5b show flow charts representing the rebuilding method according to the present invention;
- figure 6 schematically shows relations existing among used images and rebuilt images in the rebuilding method according to the present invention;
- figure 7 shows an application of the invention to the case of more than two views with 2D retro-compatibility;
- figure 8 shows an application of the invention to the case of more than two views without 2D retro-compatibility;
- figure 9 shows a block diagram of a possible embodiment of an generation apparatus according to the invention;
- figures 10a-10d schematically show image synthesis steps used in an apparatus and in a method according to the invention;
- figures 11a-11d schematically show image rebuilding steps used in an apparatus and in a method according to the invention.

### [DETAILED DESCRIPTION]

Referring to the enclosed figures, 1 and 2 on the whole, respectively show a generation apparatus for generating a video stream and a rebuilding apparatus for the rebuilding of a video stream.

It is to be noted that, in the present context, the terms "image" and "frame" will be considered as synonymous between them and will be able to be used in an interchangeable way, while the term "map" indicates without distinction a disparity map or a depth map.

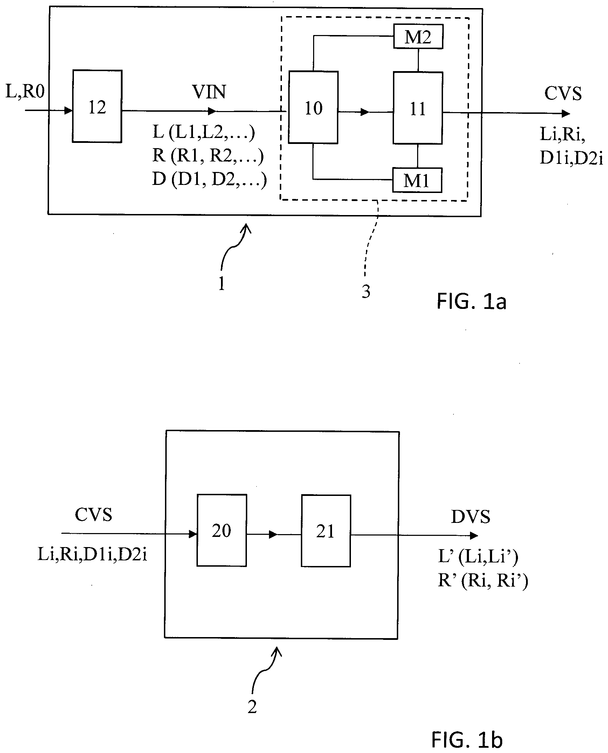

The generation apparatus 1 (figure 1a) above all comprises a communication interface 10 to receive as input a stereoscopic video stream, which will be indicated as input stereoscopic stream VIN, comprising two different image sequences: a first input sequence L of images depicting a first view of such a stereoscopic stream, and a second input sequence R of images depicting a second view of said stereoscopic stream.

The first input sequence L and the second input sequence R, when reproduced through a proper playing apparatus (as, for instance, a TV set with 3D prearrangement) allow to display contents in such a way that the user has the feeling of the depth at which the various depicted elements stay, thereby giving the feeling of a 3D depiction of said contents.

As an example, the first input sequence L can be related to the left view of the stereoscopic stream, while the second input sequence R can be related to the right view of such a flow. It is however to be noted that the invention can be carried out also in the diametrically opposed situation, in which the first sequence L is depicting the right view and the second sequence R is depicting the left view.

In particular, the communication interface 10 receives as input one or more images of the first input sequence L, and one or more images of the second input sequence R.

The images of the first input sequence L can be stored, for instance, in a first memory area M1; the images of the second input sequence R can be stored, for instance, in a second memory area M2.

The first and/or second memory areas M1, M2 can belong to a non-volatile memory, wherein the first and/or the second input sequence L, R can be stored in a stable way, till a subsequent erase command, or to a volatile memory, wherein the first and/or the second input sequence L, R, or their parts, are stored just for the time strictly necessary for processing thereof.

The communication interface 10 receives as input one or more maps allowing, starting from one or more of the images of the first input sequence L, to rebuild substantially correspondent images of the second input sequence R.

In practice, by combining among them a determined image of the first input sequence L and one corresponding of said maps, it is possible to substantially obtain the respective image belonging to the second input sequence R, that is the image of the second input sequence R associated to the same time reference of the image of the first input sequence L.

As will be clearer later on, such a rebuilding can be not complete because of the so-called "occlusions".

The communication interface 10 receives in the input one or more D maps allowing, starting from one or more of the images of the second input sequence R, and respectively from the first input sequence L, to substantially rebuild corresponding images of the first input sequence L, and respectively of the second input sequence R. Also these rebuilds could be not complete, because of the already above explained reasons.

The maps can be depth maps or disparity maps. Said maps can be produced through per se known techniques, which will not be disclosed herein in detail. It is however to be noted that, for the aims of the implementation of the present invention, both depth maps and disparity maps can be used. This observation refers not only to the above mentioned maps, but also to other "maps" which are mentioned in the present description and in the following claims.

In an embodiment, the apparatus 1 can be arranged to receive as input just the first and the second input sequence L, R, and to autonomously compute the necessary maps. The suitable processing module generating the maps in this embodiment, provides to supply as input of the communication interface 10 the generated maps, so that they can be processed by the processing unit 11 for the creation of the encoded video stream CVS. Advantageously the maps can be stored in a proper memory register, belonging to a volatile memory or a non-volatile memory.

The generation apparatus 1 further comprises a processing unit 11 operatively associated to the communication interface 10 and, preferably, to the mentioned first and second memory areas M1, M2.

The processing unit 11 provides to generate as output an encoded video stream CVS which, although presents on the whole a significantly lesser memory occupation with respect to the input stereoscopic stream VIN and so can be transmitted using lesser band resources, contains all the essential information in order that the contents of the essential stream can be faithfully reproduced.

Going in more detail, the processing unit 11 is configured to determine at least a first image L1 of the first input sequence L.

Preferably such a first image L1 is selected among the images belonging to the first input sequence L.

It is to be noted that, in the present context and in the following claims, with "first image" it is not necessarily designed the initial image of the first input sequence L, but simply one of the images received by processing unit 11 through the communication interface 10. The same observation also holds for both the "first image" of the second input sequence R, and the term "second image", which will be later mentioned.

The processing unit 11 is further configured to determine a first map D1.

The first map D1 can be selected among the maps received as input through the cited communication interface 10.

The first map D1 is such that, by combining the same with the first image L1 of the first input sequence L, it is possible to substantially rebuild a first image R1 of the second input sequence R. As said, such a rebuilding can be not complete.

The processing unit 11 is further configured to determine a second image R2 of the second input sequence R.

The second image R2 of the second input sequence can be selected among the images of the second input sequence R.

The processing unit 11 is further configured to determine a second map D2.

The second map D2 (which can be, for instance, a depth map or a disparity map) is such that, by combining the same with the second image R2 of the second input sequence R it can be substantially possible to rebuild a second image L2 of the first input sequence L. Preferably, the second image L2 and the second image R2 are associated to a same time reference.

Preferably, the second images L2, R2 are time following and time adjacent, respectively, to the first images L1, R1.

The processing unit 11 so can prepare as output the encoded video stream CVS; the latter comprises at least: the first image L1 of the first input sequence L, the first map D1, the second image R2 of the second input sequence R and the second map D2.

In this way, the encoded video stream CVS can allow a use of the initial stereoscopic video stream VIN so avoiding that the last one is stored and/or integrally transmitted. The encoded video stream CVS can be broadcasted, for instance for a use through TV sets able to decode the encoded video stream CVS, or associated to proper external decoders for said decoding.

The encoded video stream CVS can also be recorded on a proper magnetic and/or optical and/or electronic support. Such a support can then be associated to a decoder to allow a use of the contents of the stored video stream.

As above mentioned, not always by using the first image L1 of the first input sequence L and the respective map D1 (or, similarly, the second image R2 of the second input sequence R and the respective second map D2) it is possible to completely rebuild the first image R1 of the second input sequence R (or the second image L2 of the first input sequence L).

So-called "occlusions" can occur, i.e. pixels or pixel groups, representing background parts and/or object parts, present just in one of the two views. These pixels are present in particular on the edges of the objects of the scene, particularly in presence of relatively near objects, superimposed and moving. In other words, the first image R1 of the second input sequence R can contain some pixels and/or areas which do not have any correspondence in the first image L1 of first input sequence L and consequently which cannot be rebuilt using just L1 and D1.

The same applies to the rebuilding of the second image L2 of the first input sequence L starting from R2 and D2.

To avoid this drawback, which practically is an incomplete reproduction of some images, and a corresponding reduction of the use quality of the video stream, it is provided that the processing unit 11 identifies one or more occluded pixels, as a function of the first image L1 of the first input sequence L, and the corresponding first map D1. So descriptive data of one or more replacement pixels to substitute said one or more occluded pixels are determined as a function of one or more images of the second input sequence R.

In an embodiment, to locate the occluded pixels, the processing unit 11 can combine the first image L1 of the first input sequence L with the first map D1, obtaining a respective combination. By comparing such a combination, which can be similar but not completely identical to the first image R1 of the second input sequence R, exactly with the first image R1 of the second input sequence R, the processing unit 11 locates the occluded pixels and the related replacement pixels.

In an embodiment, the descriptive data of the replacement pixels can be determined in function of one or more images belonging to the second input sequence R different from (i.e. other with respect to) said first image R1.

Preferably, said descriptive data can be determined in function of an image time adjacent and time preceding said first image R1.

As an example, in the second input sequence R the image immediately preceding the first image R1 can be used.

Preferably specific replacement pixels are located which cannot be synthesized as a function of just one preceding image and/or a subsequent image to said corresponding image R1 belonging to said second input sequence R. In practice the processing unit 11 provides to locate those occluded pixels which cannot be rebuilt by the decoder on the basis of the single preceding image and/or of the only subsequent image with respect to the image to be rebuilt.

The processing unit 11 so determines the main data descriptive of said determined replacement pixels.

The main data are advantageously inserted in the encoded video stream CVS, so that they can be used in the decoding step.

In an embodiment, the main data can comprise motion vectors associated to the occluded pixels.

Said motion vectors are per se known and included in some coding standards (for instance H264/AVC). It is however envisaged that proper parameters can be used - also not coinciding with those defined in the current video coding standards - which describe the movement of the occluded pixels to improve their rebuilding at the encoding time.

As an example, the mentioned describing parameters of the replacement pixels can be obtained by means of a *view synthesis* system using the only information present in the depth map to locate the occluded areas.

As above mentioned, the first image R1 of the first input sequence R can be used to assess the value of the occluded pixels: a part of these pixels can be obtained from the preceding image belonging to the same sequence R, while the remaining ones, particularly regarding movement areas, are sought between the preceding images and the following images (with respect to the first image R1) belonging to the second sequence R.

As regards the image (of either the first or the second input sequence L, R) which has to be encoded and which, according to the time sequence with which the images are arranged, is preceding all the other ones, there will not be images preceding the same which can be used for the assessment of the occlusions and for determining the relative replacement pixels. In such a particular case, it will be advantageously used one or more of the following images. In an embodiment, it will be used the thereto adjacent image and that immediately following in the time.

As will be later clearer, the replacement pixels determinable through images preceding and/or following that to be encoded can be computed by the decoder without that in the encoded video stream CVS are inserted specific data identifying and describing said replacement pixels.

What can be advantageously inserted in the encoded video stream CVS are the mentioned main data, allowing to determine the replacement pixels not determinable through the only preceding image and/or the only image following that in question.

It is to be noted that, as the occluded pixels which cannot be obtained from the preceding (o the following) frame are typically just a small percentage of the total, the information overhead to send due to the presence of the movement vectors is normally negligible or however very reduced with respect to that necessary in case of absence of this feature. What above described with reference to the identification of the information useful to the rebuilding of the first image R1 of the second input sequence R applies in a fully similar way to the synthesis of the second image L2 of the first input sequence L.

It is to be noted that what above described referring to the only first and second images L1, L2, R1, R2 can be in practice embodied with a well higher image number so to make video streams of short films, movies, and so on.

The communication interface 10 in fact can receive an input sequence L comprising a well higher image number. In particular, the first input sequence L comprises a first plurality of images Li each one of them being associated to a respective first time reference TLi, identifying the position inside the first input sequence L.

The first plurality of images Li comprises the above mentioned first image L1.

The first input sequence L can further comprise images alternated with the images of said first plurality Li, that is images associated to time references (which, as will be later clearer, will be identified as TRi) alternated with the first time references TLi.

The second input sequence R received by the communication interface 10 comprises a second plurality of images Ri each one associated with a respective second time reference TRi, identifying the location inside the second input sequence R.

The second plurality of images Ri comprises the above mentioned second image R2.

The second input sequence R can further comprise images alternated with the images of said second plurality Ri, that is images associated to time references alternated with to the second time references TRi. In practice, said further images, of the second input sequence R, are associated to the above mentioned first time references TLi.

Advantageously the first time references TLi are timely alternated to the second time references Tri. In other terms, in the preferred embodiment, the images of the first plurality of images Li are time alternated with the images of the second plurality Ri. Preferably the first input sequence L is stored in the first memory area M1, and the second input sequence R is stored in the second memory area M2.

The communication interface 10 is configured to receive a first plurality of maps D1i belonging the input stream Vin.

The maps of the first plurality of maps D1i are preferably depth maps or disparity maps.

The maps of the first plurality of maps D1i are such that, by combining each one of said maps with the respective image of said first plurality of images Li, the corresponding image of the second input sequence R is substantially obtained (except for occlusions or other like phenomena).

The first plurality of maps D1i comprises the above mentioned first map D1.

The communication interface 10 is further configured to receive a second plurality of maps D2i forming part of the input stream Vin.

The maps of the second plurality of maps D2i are preferably depth maps or disparity maps.

The maps of the second plurality of maps D2i are such that, by combining each one of said maps with the respective image of said second plurality Ri, the corresponding image of the first input sequence L is substantially obtained (except for occlusions or other like phenomena).

The second plurality of maps D2i comprises the above mentioned second map D2.

The processing unit 11 is then configured to operate on the images of the first plurality Li, on the images of the second plurality Ri and on the respective maps D1i, D2i according to the same above described technique with reference to the first image L1 of the first input sequence L, to the first map D1, to the second image R2 of the second input sequence R and to the second map D2.

The processing unit 11 is configured for inserting in the encoded video stream CVS the first plurality of images Li, the first plurality of maps D1i, the second plurality of images Ri and the second plurality D2i of maps.

The encoded video stream CVS so contains, for each one time moment, an image of the first plurality Li associated to the respective first map D1i (first time references TLi), or an image of the second plurality Ri associated to the respective second map D2i (second time references TRi).

Preferably, the processing unit 11 is configured for associating, to one or more maps of the first and/or the second plurality D1i, D2i, descriptive data of replacement pixels. Said descriptive data can be advantageously determined through the above described techniques.

In particular, the descriptive data can consist of the above mentioned main data.

The input interface 10, the processing unit 11 and preferably the first and/or the second memory areas M1, M2 form a generator, making part of the generating apparatus 1 and indicated by the reference number 3 in figure 1.

Advantageously it is provided a pre-processing of the images initially provided to the generating apparatus 1, particularly in the case in which the two views depicted by the two input sequences present remarkable differences in terms of colorimetry and/or brightness. In such a circumstance, in fact, the display of the decoded video stream could be troublesome owing to alternation of images with features so different from each other. To this aim the generating apparatus 1 can optionally be provided with a pre-processing module 12, pre-arranged upstream of the processing unit 11.

The pre-processing module 12 operates based on the first input sequence L and on the initial sequence R0.

The initial sequence R0 contains a plurality of images R0i representative of the second view of the input stereoscopic stream; each of such images is associated with a corresponding image of the first input sequence L.

In practice the first input sequence L and the initial sequence R0 are the sequences originally received by the apparatus 1.

The pre-processing module 12 provides to compare one or more images R0i of the initial sequence R0 with the corresponding images of the first input sequence L, namely with images of the first input sequence L associated to the same time references of the images R0i of the initial sequence R0.

In function of said comparisons, the images forming part of the above mentioned second input sequence R are obtained.

In greater detail, as a function of each comparison a second corresponding map Di is made; then, by combining the images of the first input sequence L with the respective maps Di, the images of the second input sequence R are rebuilt.

Preferably, in the image rebuilding of the second input sequence R also the possible occlusions are taken into account, preventing a complete rebuilding starting from the images of the first input sequence L and the related maps D1. The replacement pixels to be used for said occlusions can be decisive, according to per se known techniques, as a function of initial sequence R0. As an example, the above disclosed algorithms can be used with reference to the generation of the encoded video stream CVS.

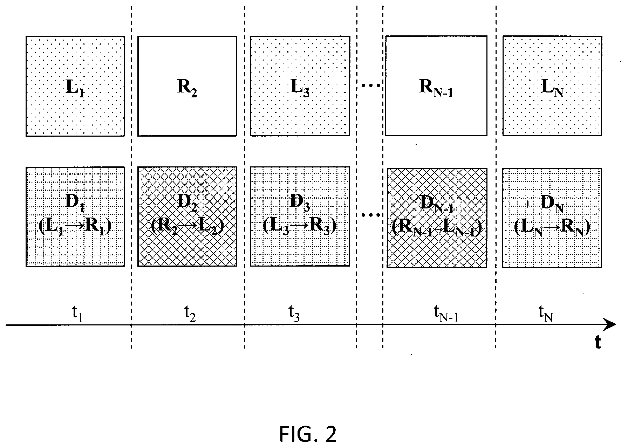

Figure 2 depicts in illustrative way a stereoscopic video stream following the approach proposed by the present invention. In such a depiction the growing times go from left to right. In the case of figure 2 at the time t1 is transmitted to the encoder the frame L1 and in parallel the depth map D1, while at the time t2 follows R2 with the map D2, and so on. The times t1, t3,... are comprised in the above mentioned first time references TLi; the times t2, t4,... are comprised in the above mentioned second time references TRi.

It is supposed that are well known to the generator the sequences of the alternate frames comprising the images of the Left View and the Right View, as well as the related maps (of disparity or depth); as an example, said maps are presented as depth maps of the left view with respect to the right (Depth Left) and of the right view with respect to the left (Right Depth).

In general the sequences of the images associated to the left view and to the right one are obtained in real time through proper catching instruments (TV cameras) during a stereoscopic shot, or off-line through computing techniques and instruments borrowed from the computer graphics. The disparity/depth maps can be computed through any known technique starting from the images of the two views and/or from the knowledge of the shot conditions of the images, or artificially generated by proper computing instruments.

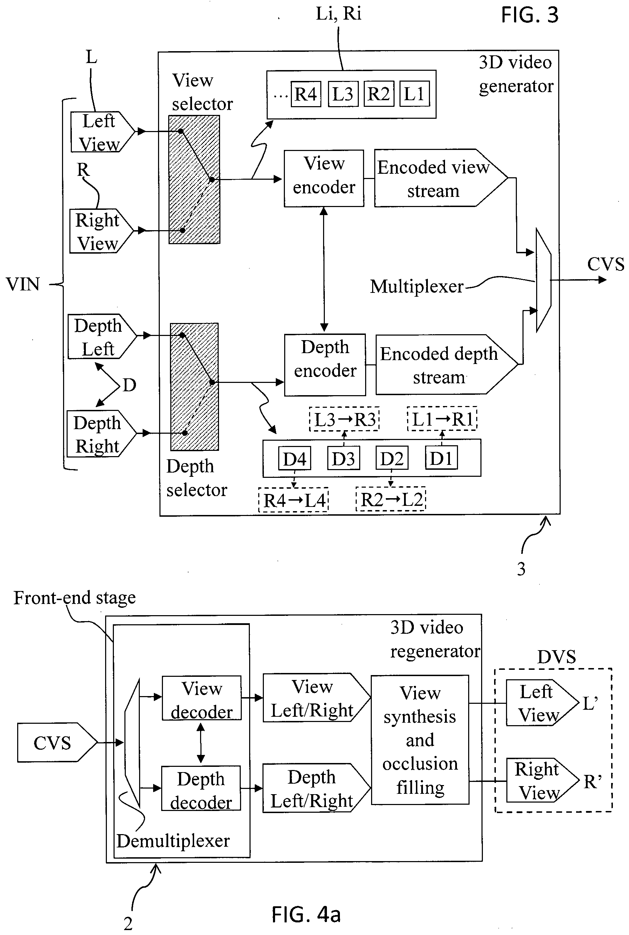

Figure 3 depicts in exemplary way the block diagram of an embodiment of a stereoscopic video stream generator 3 according to the invention.

Such a generator 3 generates schematically the stream depicted in figure 2.

As said it is supposed that the generator is provided with, both the images of the input sequences L, R, and the related maps.

A proper *View selector* provides to alternate the frames starting from those setting the two input views, for instance starting from the left view. In such a case the view images L1, R2, L3, R4, etc., for the time periods t1, t2, t3, t4, etc. are selected in this order, obtaining a stereoscopic stream according the upper part of the figure 2. A second map selector, coordinately operating with the first one, alternatively operates the map of the right view with respect to the left view, and the map of the left view with respect to the right one. In particular, the first map D(L → R) contains the information that the right image R, of the interested frame time, presents with respect to the corresponding image of the left view L, while the map D(R → L) contains the information of the left image L, of the interested frame time, with respect to the corresponding image of the other view R. Supposing to start from the left view, it is so generated on the output of the selector a data stream consisting in the order, by the sequence D1(L1 → R1), D2(R2 → L2), D3(L3 → R3), D4(R4 → L4), etc., as depicted in the lower part of figure 2.

The maps D1, D3, ... belong to the above mentioned first plurality of maps D1i. The maps D2, D4, ... belong to the above mentioned second plurality of maps D2i.

The two sequences of the view images and of the alternated maps are respectively encoded by a *View encoder* and a *Depth encoder* which can operate in cooperating way taking into account the information contained at the input of the other encoder and also the encoding techniques adopted by the other encoder.

The two encoders can be of known kind; for instance they can adopt well known video code standards such as MPEG-2, MPEG-4 AVC, VC-1, etc., so as to use already existing instruments o devices for the compression of the images. Alternatively they can operate according to future code systems still under standardization, such as MPEG-4 AVC/SVC/MVC with the appropriate extensions necessary to include depth maps, HEVC and relative extensions.

The two streams *Encoded view stream* and *Encoded depth stream* respectively consisting of alternated views and maps, both compressed, exiting from the two encoders, are merged in the stereoscopic video encoded stream CVS by a Multiplexer, providing a parallel-series conversion of the two input streams.

The encoded video stream CVS will be possibly compounded with other information streams such as audio streams and/or data (subtitles, metadata, etc.) and stored in a storing device for subsequent play in a system, designed to allow the display, or to be transmitted according to the state of the art through cable, radio, satellite, IP (Internet Protocol), and so on.

It is to be noted that the diagram of figure 3 is exemplary at all and is one of possible ways to embody a generator of stereoscopic streams according to the invention. In fact, it is possible to arrange a multiplexer downstream of the two view and map selectors providing for the parallel-series conversion of the two view and map selectors in just one stream. This alternate unified stream is coded by just one view and map encoder generating the encoded video stream CVS of figure 3.

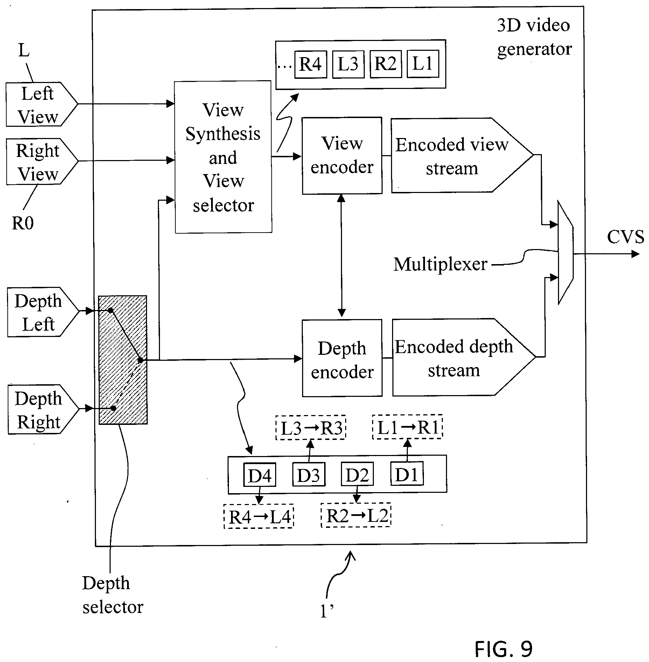

Figure 9 shows a block diagram of a possible embodiment of a generating apparatus 1' implementing the synthesis of the two input sequences.

The generating apparatus 1' is similar to the apparatus 1 shown in figure 1a: the substantial difference regards the fact that the apparatus 1 of figure 1 receives as input just the sequences L, R0 and independently generates the maps D, while the apparatus 1'of figure 9 receives as input both the sequences L, R0, and the maps D.

The block "View selector" of figure 3 has been replaced with the block "View synthesis and View Selector", in figure 9. This last one presents three inputs: the left view, the right view and the depth map exiting from the block Depth Selector for selecting the depth map.

The inputs are processed in such a way that one of the two views (for instance the right one) is synthesized starting from the depth map and from the other view and then transmitted instead of the original one, while the other (for instance the left one) is sent in original form. In such a way the brightness and colorimetry difference present in the adjacent frames is reduced. The synthesis is effected using at first sight the disparity information present in the depth map, and the other view; instead the occlusions, after having been identified, are obtained from the same original stereoscopic view. In substance it is a procedure similar to that used by the rebuilding apparatus to obtain the frames of the missing view starting from the received ones.

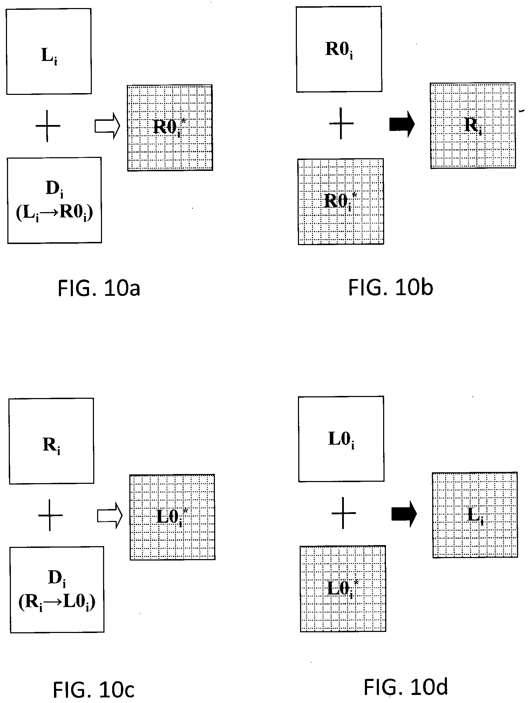

Figures 10a-10d show the necessary steps for the synthesis; in particular figures 10a and 10b refer to the case in which the left view is taken as reference, while figures 10c and 10d refer to the case in which the right view is taken as reference.

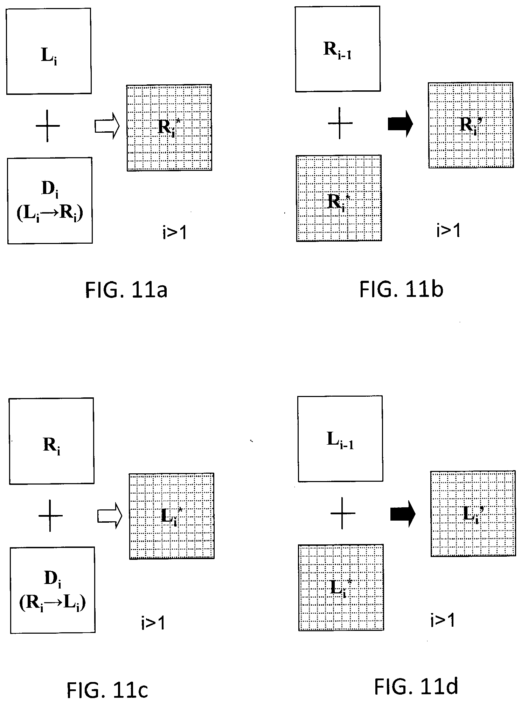

Figures 10a and 10c show the first step of the synthesis algorithm for the i^{th} frame of the stream; from the view Li and from the depth map Di(Li → Ri) the view R0i* is computed through a View Synthesis block of known kind which can also be the same used in rebuilding step. The frames R0i* contain some unknown pixels at the occluded regions which are not obtainable from the View Synthesis algorithm. In contrast with what happens in the rebuilding (figures 11b and 11d, which will be described later), on the generation side the corresponding original view R0i is available, whereby it can be directly exploited to obtain the unknown pixels, for example by copying, from R0i in R0i*, the values of the occluded pixels identified by the view synthesis algorithm, so obtaining a virtual rebuilt view, which will be used to form the second sequence R of the two sequences L, R forming the stereoscopic stream exiting from the View Synthesis and View Selector block. This procedure can be advantageously carried out for all the frames of the video sequence.

In case the right view is taken as a reference, the same steps are carried out starting from the sequences R, L0, computing the incomplete views L0i* and, from these, the rebuilt virtual views Li to be used in the generation of the stereoscopic stream exiting from the View Synthesis and View Selector block (figures 10c and 10d).

As said above, the encoded video stream CVS can be transmitted and/or stored on a proper storing support, in order to be provided later to an apparatus able to rebuild the initial video stream so to allow a use of the same.

Such an apparatus for the rebuilding of a video stream, or decoder apparatus, is indicated by the numeral 2 in the enclosed figures.

The rebuilding apparatus 2 (figure 1b), first of all, comprises an input interface 20 to receive as input an encoded video stream CVS.

Such an encoded video stream CVS has the above described structure. In synthesis, the encoded video stream CVS comprises at least: a first image L1 of a first input sequence L, a first map D1 associated to such a first image L1, a second image R2 of a second input sequence R and a second map sequence associated to such a second image R2.

The rebuilding apparatus 2 further comprises an operating module 21 configured to carry out, in general, steps specular to the above described ones with reference to the generation step of the video stream.

In particular, the operating module 21 provides to rebuild a first image R1 of the second input sequence R as a function of the first image L1 of the first input sequence L and of the first map D1 associated therewith; in this way a first rebuilt image R1' is obtained. The operating module 21 further reconstructs a second image L2 of the first input sequence L as a function of the second image R2 of the second input sequence R and the second map D2 associated thereto; in such a way a second rebuilt image L2' is obtained. Following the above described steps the operating module 21 can thus prepare as output a decoded stereoscopic video stream DVS; such a decoded video stream DVS comprises:
- a first output sequence L' comprising the first image L1 of the first input sequence L and the second rebuilt image L2', and
- a second output sequence R' comprising the first rebuilt image R1' and the second image R2 of the input sequence R.

In particular, in the first output sequence L' the second rebuilt image L2' is time following and time adjacent to the first image L1 of the first input sequence L and, in the second output sequence R', the second image R2 of the second input sequence R is time following and time adjacent to the first rebuilt first image R1'.

The first and second output sequences L', R' are respectively representative of a first and second view of a decoded stereoscopic video stream DVS.

Therefore, by associating the rebuilding apparatus 2 to a proper display device, as for instance a TV set provided with 3D display function, it will be possible to display the decoded video stream DVS giving the user the proper depth representation of the contents of such a stream.

As said above, preferably the encoded video stream CVS received by the rebuilding apparatus 2 comprises in general, a first plurality of images Li belonging to the first input sequence L, a first plurality of maps D1i each one associated to a respective image of said first plurality of images Li, a second plurality of images Ri belonging to the second input sequence R, and a second plurality of maps D2i each one associated to a respective image of the second plurality of images Ri.

Referring to what already described with respect to the generation apparatus 1, the first plurality of images Li comprises a first image Li of the first input sequence L, the first plurality of maps D1i comprises a first map D1, the second plurality of images Ri comprises the second image R2 of the second input sequence R, and the second plurality of maps D2i comprises the second map D2.

Preferably each one image Li of the first plurality is associated to a respective first time reference TLi, and each image Ri of the second plurality is associated to a respective second time reference TRi.

Advantageously the first time references TLi are time alternated to the second time references TRi.

In practice, the images of the first plurality of images Li are time alternated to the images of the second plurality Ri.

Once the input interface 20 receives such an encoded stereoscopic video stream CVS, the operating module 21 provides to operate on the images forming such a stream in the above described manner with reference to the first image L1 and the second image R2, in order to rebuild the missing images and to generate as output the decoded video stream DVS.

In particular, the operating module 21 is configured to rebuild images of the second input sequence R as a function of the first plurality of images Li and the first plurality of maps D1i, obtaining corresponding first rebuilt images Ri'.

The operating module 21 further provides to rebuild images of the first input sequence L as a function of the second plurality of images Ri and the second plurality of maps D2i, obtaining corresponding second rebuilt images Li'.

The output decoded video stream DVS will thus comprise:
- a first output sequence L' comprising the first plurality of images Li and the second rebuilt images Li', and
- a second output sequence R' comprising the second plurality of images Ri and the first rebuilt images Ri'.

The first and second output sequence L', R' are respectively representative of a first and a second view of the decoded stereoscopic video stream DVS.

The operating module 21 is preferably configured to manage the presence of one or more occluded pixels which, for instance, can prevent a complete rebuilding, as a function of the first image L1 of the first input sequence L and the related first map D1, of the first rebuilt image R1'.

In particular, as a function of the first image L1 of the first input sequence L and the related first map D1, the operating module 21 identifies one or more occluded pixels with respect to the corresponding first image R1 of the second input sequence R. The operating module 21 so provides to determine, as a function of one or more determined images of the second input sequence R, one or more replacement pixels to replace one or more occluded pixels.

In more detail, the images of the second input sequence R, used by the operating module 21 to determine said replacement pixels, are images belonging to the mentioned plurality of images Ri comprised in the encoded video stream CVS.

Preferably the image immediately preceding that to be rebuilt is taken into consideration. In addition or in alternative the following one can be used. For the initial image, that is that image not having by definition a previous image, the following image is necessarily used.

This operation can be carried out for each one of the images to be rebuilt, should they belong to the first or second output sequence L', R'.

Advantageously the encoded video stream CVS can comprise describing data of replacement pixels to be used in some cases in the rebuilding of the missing images.

As above described, said describing data are inserted in the encode step wherein the only images and maps available to the decoder would not be enough for a complete and satisfactory rebuilding of the missing images.

As an example, the describing data of replacement pixels, which preferably can comprise or consist of the mentioned main data, can comprise motion vectors.

The operating module 21 is thus configured to detect in the encoded video stream CVS, the descriptive data of replacement pixels, if present, and to use the same for the rebuilding of the occluded areas.

Figures 11a-11d schematically show how the missing incomplete views Li*, Ri*, that is the rebuilt views in which are still present some occlusions can be rebuilt at each step "i" greater than 1, and how the complete missing views Li', Ri' can be rebuilt from these, i.e. the views in which the occlusions have been substituted, starting from the actually received frames. Figures 11a and 11c exemplify what already depicted for the rebuilding of the incomplete missing views Li*, Ri*; figures 11b and 11d depict a possible way to rebuild the complete missing views Li', Ri' starting from the incomplete ones Li*, Ri*, studded by the holes composed by unknown occluded pixels. The simplest way to proceed is using the pixels corresponding or adjacent to those occluded present in the view frame immediately preceding the missing one, which is preferably always transmitted or stored, and so it is known to the rebuilding device, which stored it in the buffer in the preceding step. The first missing view which is not preceded by any other view is the only exception: for this case it is possible, for instance, use the immediately subsequent view.

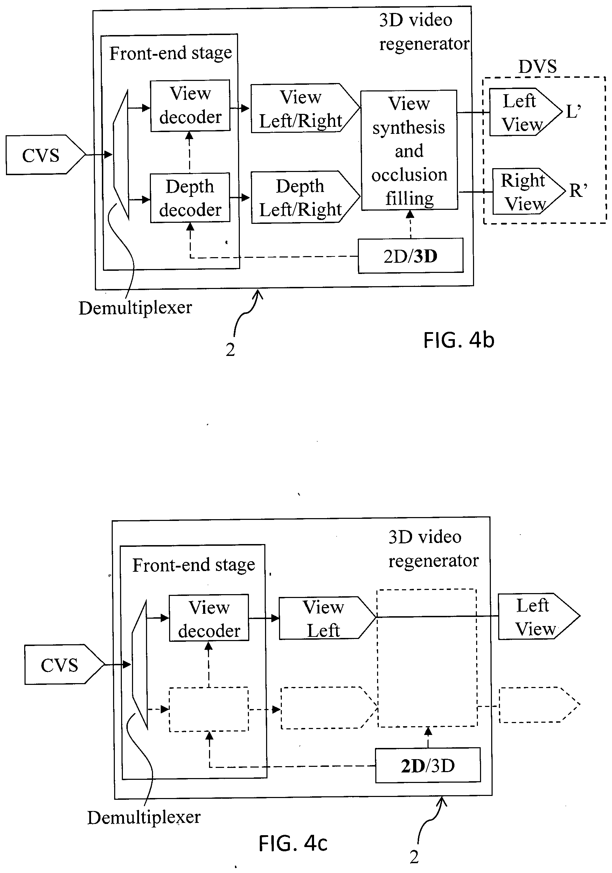

Figure 4 depicts the block diagram of a stereoscopic stream rebuilding device or rebuilding apparatus 2 according to the invention. At its input the encoded alternated and compressed video stream CVS is present, of the kind present at the output of the generator of figure 3. In the desirable case of storing and/or transmitting without errors, the two stereoscopic streams are exactly equal, otherwise will differ just for unwanted digital errors introduced by the operations effected downstream the generator and upstream the rebuilding device. The stream is introduced in the initial stage of the rebuilding device referred to as *Front-end stage* consisting of a *Demultiplexer* making the inverse operation of the *Multiplexer* of the generator by decomposing the input stream in the two streams *Encoded view stream* and *Encoded depth stream* which were present as input of such a *Multiplexer.* The first stream contains the compressed and alternated sequence of the images of the two views; such a sequence is encoded by an appropriate *View Decoder.* The encoder produces as output the sequence *View Left*/*Right* comprising the alternated images of the decoded left and right views. Similarly the sequence of the compressed alternated maps *Encoded depth stream* present on the lower output line of the *Demultiplexer* is processed by the decoder *Depth Decoder* producing as output the sequence *Depth Left*/*Right* of the decoded alternate maps.

The two video decoders can be of known kind, such as, for instance MPEG-2 or MPEG-4 AVC, or one of those future ones under standardization such as MPEG-4 AVC/SVC/MVC and HEVC with the extension of depth maps, or to be a their modified version optimized for treating the video streams present on their input. The two decoders operate in synergy in coordinate way and can possibly exchange control signals and data with each other for exploiting time and video content information of the streams adapted to warrant the appropriate operation and an optimal decoding, based on the compression system adopted for the generation of the complex stream.

Also on the rebuilding side hold the same considerations made for the encoding in generation side: alternatively to the scheme proposed in figure 4 a single decoding block can be used as *Front-end stage* providing to decode the encoded video stream CVS present as input and to produce as output the two streams *View Left*/*Right and Depth Left*/*Right* comprising the view images and the alternated and decoded maps respectively. The input *Front-end stage* can so comprise an only video decoder device providing, according to the cases, to de-multiplex the only input stream or to treat the two not demultiplexed input streams to provide as output the two separated streams.

Later, these two streams are processed by a block of view synthesis and occlusion filling *View Synthesis and occlusion filling,* making part of the mentioned operating module 21, dealing with generating the missing view, i.e. the not transmitted view, using where possible the information contained in the map. The parts that can not be rebuilt through the map are obtained using the particular alternate set of the stream received in accordance with the above described technique.

As output of the block *View Synthesis and occlusion filling* the two sequences relating the Left View and the Right View are obtained, which can be thus provided to a display apparatus for their 3D yield (or also just 2D yield) according to any prior art, such as the *line interleave* or *frame alternate* technique.

In the case it is wanted to display a 3D video in 2D mode, it is possible to proceed in different ways.

In a first solution it is possible to use the block *View Synthesis and occlusion filling* to rebuild the missing view as it happens for the 3D case, leaving to the display device the discard operation of all right and left images not necessary for the 2D vision. In such a case the resulting frame rate of the video content displayed in 2D is equal to the original one present on the generation side. In substance a complete regeneration of the 3D stream is performed according to the functional scheme depicted in figure 4a and a display device downstream from the 3D regenerator discards all the frames related to one of the views.

As a second solution only the frames transmitted for just one of the two views are used and the video is displayed at a frame rate which is one half with respect to the first solution, as shown in example way in a 3D reconfigurable stream regenerator shown in figure 4c, if the 2D display mode is active. In such a figure the deactivated blocks and the absent signals are shown by dashed lines. A control module 2D/3D coordinates and manages the operation of the decoders and of the block of view synthesis and occlusion management. For instance if the frame rate of the video stream is 50 fps (frame per second) and the left view (Left) is taken as a reference, all the frames belonging to the maps are discarded at the output of the de-multiplexer, as well as the frames relating the right view using an information which could be time-related or coming from the transport stream. As output a video with the frames belonging to the left view at a frame rate of 25 fps will be displayed, without the block *View Synthesis and occlusion filling* making any operation and without rebuilding any frame of the right or left view.

This second solution allows to considerably simplifying the operations on the regeneration side as the rebuilding steps of the missing view frames and the related occlusions are no more necessary.

Figure 4b depicts the operating mode of regenerator of figure 4c when the 3D display is activated: in such a case the control module of the 2D/3D display operates so that the functional blocks present therein do operate as described for the regenerator of figure 4a, obtaining as output the same kind of video stereoscopic sequence which can be represented in 3D mode.

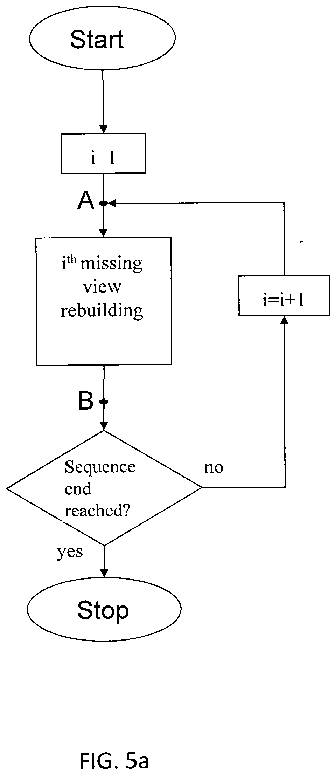

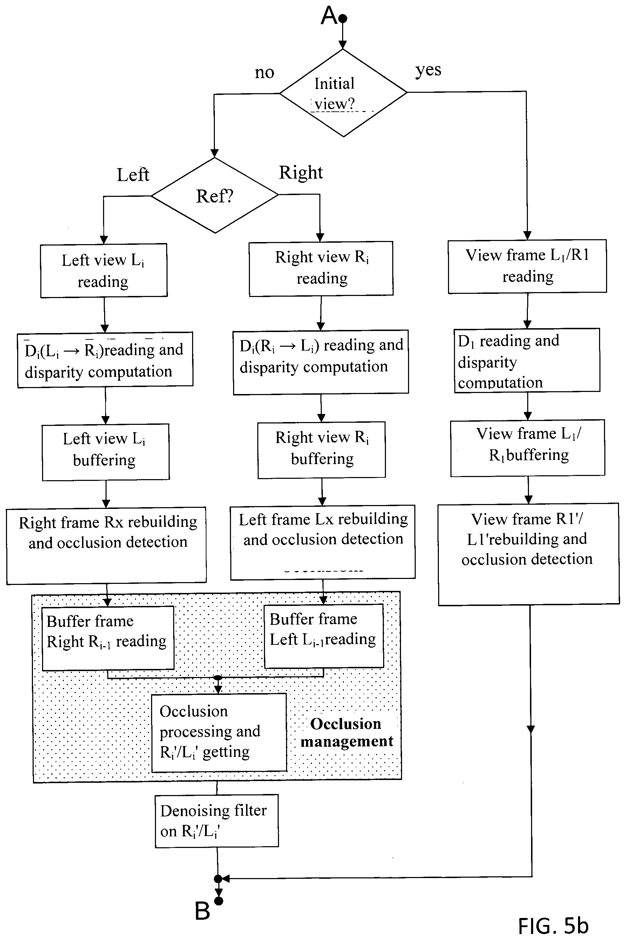

Figure 5a shows the iterative structure of the process cyclically repeated for each frame pair received at a determined time *ti,* while figure 5b details the single steps made for the rebuilding of the i^{th} frame (making part of the images Li' or Ri') not transmitted and then not received by the regenerating apparatus.

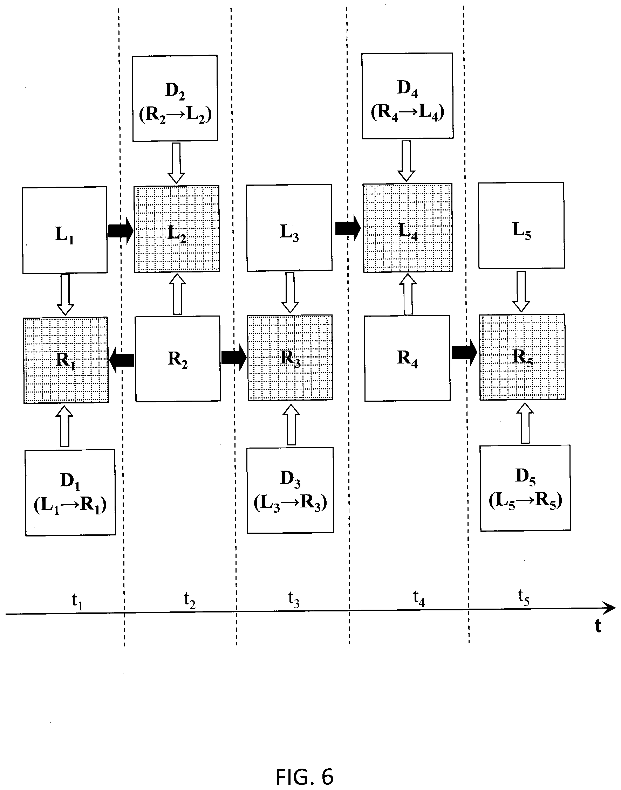

Figure 6 details how the missing frames are rebuilt starting from those actually present as input during the rebuilding procedure of the frames of the two views. For the sake of clarity the frames present as input of the rebuilder are depicted without any plot, while the rebuilt ones present a rectangular plot.

Back to figure 5b, with the first step it is checked if the frame pair on the inputs L1 and D1 is the first video sequence since, in such a case, it is preferable to wait for the reception of the subsequent pair before proceeding to the complete rebuilding, occlusions included, of the first frame of the missing view, not without having stored in advance the received first view frame and the related depth map. In the case shown in figure 6 it is about L1 and D1 (L1 → R1).

The following control checks if the received frame (of reference) belongs to the right or left views: in the first case the left frame is rebuilt starting from the immediately preceding left frame and from the related depth map, while the right frame is stored in a buffer to be used during the rebuilding of the following right frame, as supposed in figure 6 for the frames related to the times t2 and t4; in the second case the right frame is rebuilt and the left frame is stored in a buffer to be used during the rebuilding of the subsequent left frame, as supposed in figure 6 for the frames related to the times t3 and t5. At this time the values relating the reference frame and the associated depth map are used both to compute the disparity values necessary to the rebuilding of the other view, and for picking out the pixels belonging to the occluded areas, while the values of these pixels are differently obtained from the subsequent management step of the occlusions of figure 5b. In fact, the so rebuilt frames of the right and left views are not complete as the View synthesis block generating them cannot rebuild the values of the present occluded pixels, but just detects their presence. For the sake of clarity these incomplete right and left view frames are generically referred to as Rx and Lx, respectively. The blank arrows of figure 6 indicate the use of the frame from which they are originated in order to compute Rx and Lx of the frame to which they point, while the black arrows indicate the use of the frame from which they come in order to compute the occluded pixels in the pointed frame.

This way to extract the occluded pixels from the missing views is particularly simple to embody, as it requires the storage of just a frame for every step of the rebuilding procedure and takes into account pixels belonging to one or two frames at most. It however represents just one of the multiple possible solutions: in fact it is possible to take into account also pixels belonging to many view frames preceding and/or following the one to be rebuilt.

In such a last case, the contemporary storage of more frames is necessary in order to select the pixels of the adjacent view frames which better approximate the occlusions of the frame to be rebuilt. In the case in which the algorithm cannot identify the above mentioned pixels it is possible to resort to occlusion filling techniques as for instance the in-painting in order to obtain the highest possible quality of the rebuilt view.

Then a filter is applied for reducing the noise connected to the rebuilding (referred to as de-noising filter) of already known kind; during the tests carried out by the applicant the use of a bilateral filter as de-noising filter has been noticed as particularly efficient as it allows to preserve the outlines.

At the end of the operations performed for the current frame it is checked whether frames to be processed still exist: in the affirmative the operations are stopped, while in the negative the process continues with the reading of the frame pair of the subsequent (i+1)^{th} time.

The explained invention can be extended to the case with more than two views using the modularity according to the existing requirements. On this subject two embodiments are proposed which exemplify what explained, referring to the 3D stream with more than two views present at the output of a video stream generator in a similar way to what schematically shown in figure 2.

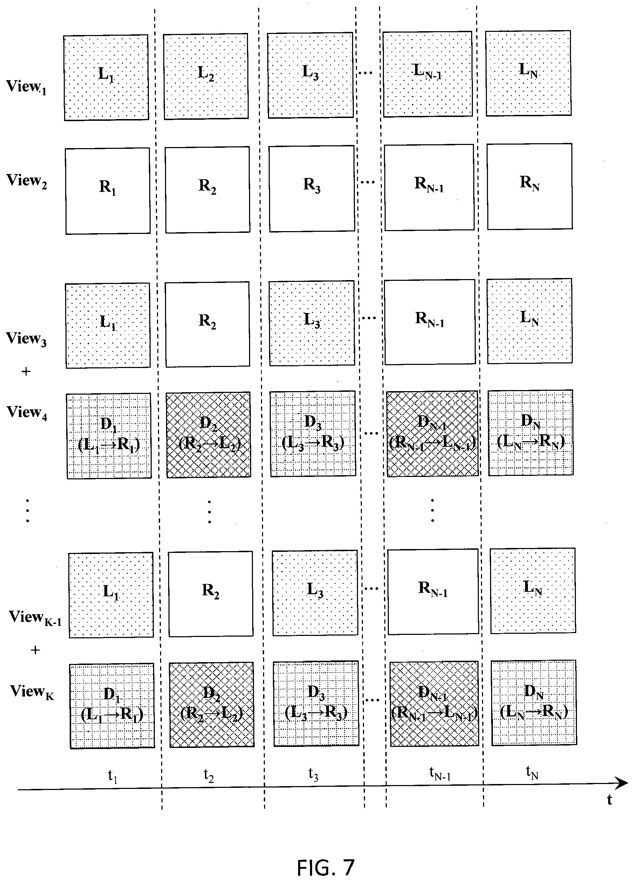

In an embodiment, described in figure 7, the requisite of the 2D retro-compatibility is maintained, as the invention is applied starting from view no. 3 while the two original views View1 and View2 are processed according to the state of the art of the existing algorithms. On the contrary, the pair of original views no. 3 and no. 4 is processed according to the invention in the same way as the above described sequence pair L, R. The same processing can be applied to the remaining present views after having properly paired them, for instance to views no. 5 and no. 6, to the 7^{th} and 8^{th} view, and so on, till the exhaustion of the views present in the system. Of course, the original view pairs of the more-than-two-view-system are rebuilt on the regeneration side in a way similar to what already disclosed above for the video stereoscopic stream composed by a left view and a right view.

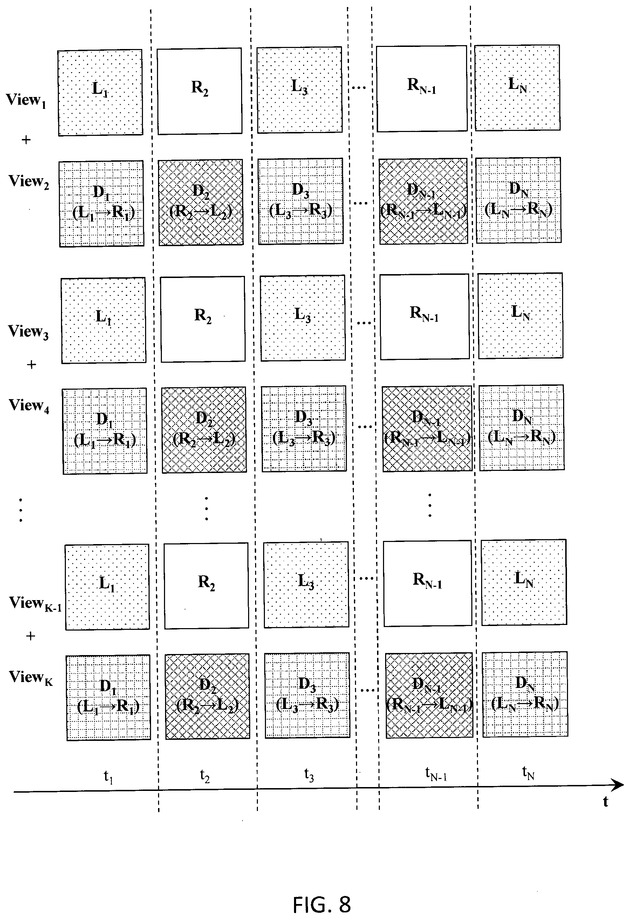

In a different embodiment, shown in figure 8, which, on the contrary, does not need the requirement of the 2D retro-compatibility, the algorithm is applied starting already from the first view pair.

In the case in which the view number is odd, the odd view is processed according to the state of the art of the existing algorithms, so maintaining in such a case the requirement of the 2D retro-compatibility.

It is to be noted that the apparatus and the above described modules can be embodied through dedicated hardware, or through general purpose hardware duly programmed to carry out the various above described functions.

The invention in fact regards also a software for generating a video stream, comprising the necessary instructions for carrying out the operations of the generating apparatus 1, and a software for rebuilding a video stream, comprising the instructions needed for carrying out the operations of the rebuilding apparatus 2.

Further, it is to be noted that the subdivision in modules or functional blocks of the above described apparatus is to be considered just formal and directed to a clear exposition of the functions of the invention. Such a subdivision, moreover, does not necessarily reflect the hardware structure of the described devices.

The invention attains important advantages.

First of all, the generation technique according to the present invention allows to encode the initial video stream reducing in significant way the size preventing, in the meantime, the loss of essential information for a complete and reliable rebuilding of the same.

In particular the encoded video stream can be stored using storing supports of limited capacity.

Further, the encoded video stream can be transmitted and received occupying limited network resources with respect to a corresponding 3D Full HD stream, just by virtue of the reduced size of the encoded stream.

Further, the encoded stereoscopic video stream can be easily adapted to be represented also in 2D mode according to two different modes, with different quality and computing complexity.

The generation and rebuilding technique of the 3D video stream according to the present invention can be applied not only to a transceiver system or a stereoscopic 3D filing-playing system, but also to corresponding 3D systems having more than two views.

In addition to what above, the decoded stream presents a substantial identity with the initial stream (i.e. with the stream not yet encoded) and allows a high quality use of 3D video contents.

## Claims

1. An apparatus for generating a video stream, comprising:
- a communication interface (10) for receiving: one or more images of a first input sequence (L) of images representative of a first view of an input stereoscopic stream (VIN); one or more images of a second input sequence (R) of images, each one corresponding to a respective image of said first input sequence (L), the images of said second input sequence (R) being representative of a second view of said input stereoscopic stream (VIN); one or more depth or disparity maps which allow, starting from one or more images of said first input sequence (L), to substantially rebuild corresponding images of said second input sequence (R); one or more depth or disparity maps which allow, starting from one or more images of said second input sequence (R), to substantially rebuild corresponding images of said first input sequence (L);
- a processing unit (11) associated with said communication interface (10) and configured for:
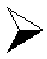 selecting a first image (L1) of said first input sequence (L);
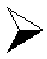 selecting a first depth or disparity map (D1), so that a first image (R1) of said second input sequence (R) can be substantially rebuilt by combining the first image (L1) of said first input sequence (L) with said first map (D1);
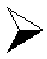 selecting a second image (R2) of said second input sequence (R);
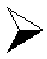 selecting a second depth or disparity map (D2), so that a second image (L2) of said first input sequence (L) can be substantially rebuilt by combining the second image (R2) of said second input sequence (R) with said second map (D2);
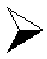 outputting a coded video stream (CVS) comprising at least the first image (L1) of said first input sequence (L), the first map (D1), the second image (R2) of said second input sequence (R) and the second map (D2), wherein said coded video stream (CVS) does not comprise the first image (R1) of said second input sequence (R) and the second image (L2) of said first input sequence (L).

2. An apparatus according to claim 1, wherein the second image (L2) of said first input sequence (L) and the second image (R2) of said second input sequence are successive and adjacent in time to the first image (L1) of said first input sequence (L) and to the first image (R1) of said second input sequence (R), respectively.

3. An apparatus according to claim 1 or 2, wherein said communication interface (10) is configured for receiving:
- a first plurality of images (Li) of said first input sequence (L), comprising said first image (L1) of said first input sequence (L), each image (Li) of said first plurality being associated with a respective first time reference (TLi);
- a second plurality of images (Ri) of said second input sequence (R), comprising said second image (R2) of said second input sequence (R), each image (Ri) of said second plurality being associated with a respective second time reference (TRi), said first time references (TLi) being alternated in time with said second time references (TRi), so that the images of said first plurality (Li) are alternated in time to the images of the second plurality (Ri);
- a first plurality of depth or disparity maps (D1i), wherein each one of said corresponding images belonging to said second input sequence (R) can be substantially rebuilt by combining each image of said first plurality of images (Li) with a respective map of said first plurality (D1i) of maps;
- a second plurality of depth or disparity maps (D2i), wherein each one of said corresponding images belonging to said first input sequence (L) can be substantially rebuilt by combining each image of said second plurality of images (Ri) with a respective map of said second plurality (D2i) of maps;
said processing unit (11) being configured for generating said coded video stream (CVS) by incorporating therein said first plurality of images (Li), said first plurality of maps (D1i), said second plurality of images (Ri) and said second plurality of maps (D2i).

4. An apparatus according to any one of the preceding claims, wherein said processing unit (11) is configured for:
- locating, as a function of the first image (L1) of said first input sequence (L) and of the corresponding first map (D1), one or more occluded pixels;
- determining, as a function of one or more images of said second input sequence (R), descriptive data relating to one or more substitution pixels to be substituted for said one or more occluded pixels;
- incorporating said descriptive data into said coded video stream (CVS).

5. An apparatus according to claim 4, wherein said processing unit (11) is configured for:
- locating specific substitution pixels, belonging to said second input sequence (R), which cannot be defined only as a function of an image preceding and/or an image following said corresponding image (R1);
- determining main data describing said specific substitution pixels;
- incorporating said descriptive data into said coded video stream (CVS) by incorporating said main data into said coded video stream (CVS).

6. An apparatus according to claim 4 or 5, wherein said data representative of substitution pixels, and preferably said main data, comprise motion vectors associated with said occluded pixels.

7. An apparatus according to any one of the preceding claims, further comprising a pre-processing module (12) configured for:
- receiving a start sequence (R0) comprising a plurality of images (R0i) representative of the second view of said input stereoscopic stream, each one associated with a corresponding image of said first input sequence (L);
- comparing one or more images (R0i) of said start sequence (R0) with the corresponding images of said first input sequence (L);
- generating, as a function of each comparison, a corresponding image of said second input sequence (R);
- providing the generated corresponding image of said second input sequence as input to said processing unit (11).

8. An apparatus according to claim 7, wherein said pre-processing module (12) is configured for:
- determining a depth or disparity map (Di) as a function of each comparison between said one or more images of said start sequence (R0) and the corresponding image of said first input sequence (L);
said corresponding image of said second input sequence (R) being generated as a function of a combination between said corresponding image of said first sequence (L) and said map (Di).

9. An apparatus for rebuilding a video stream, comprising:
- an input interface (20) for receiving a coded video stream (CVS) comprising at least a first image (L1) of a first input sequence (L), a first depth or disparity map (D1) associated with said first image (L1) of said first input sequence (L), a second image (R2) of a second input sequence (R), and a second depth or disparity map (D2) associated with said second image (R2) of said second input sequence (R), wherein said first map (D1) allows rebuilding a first image (R1) of said second input sequence (R) based on said first image (L1) of said first input sequence (L), wherein said second map (D2) allows rebuilding a second image (L2) of said first input sequence (L) based on said second image (R2) of said second input sequence (R), wherein said coded video stream (CVS) does not comprise the first image (R1) of said second input sequence (R) and the second image (L2) of said first input sequence (L);
- an operating module (21) configured for:
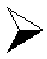 rebuilding the first image (R1) of said second input sequence (R) as a function of said first image (L1) of said first input sequence (L) and of said first map (D1), thereby obtaining a first rebuilt image (R1');
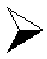 rebuilding the second image (L2) of said first input sequence (L) as a function of said second image (R2) of said second input sequence (R) and of said second map (D2), thereby obtaining a second rebuilt image (L2');
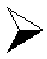 outputting a decoded stereoscopic video stream (DVS) comprising a first output sequence (L') including the first image (L1) of said first input sequence (L) and said second rebuilt image (L2'), and a second output sequence (R') including said first rebuilt image (R1') and the second image (R2) of said second input sequence (R),
said first and second output sequences (L', R') being representative of a first and a second views, respectively, of said decoded stereoscopic video stream (DVS).

10. An apparatus according to claim 9, wherein:
- in said first output sequence (L'), the second rebuilt image (L2') is successive and adjacent in time to the first image (L1) of said first input sequence (L);
- in said second output sequence (R'), the second image (R2) of said second input sequence (R) is successive and adjacent in time to said first rebuilt image (R1').

11. An apparatus according to claim 9 or 10, wherein said coded video stream (CVS) comprises a first plurality of images (Li) belonging to a first input sequence (L) of images representative of a first view of a stereoscopic stream, a first plurality of depth or disparity maps (D1i), each one associated with a respective image of said first plurality of images (Li), a second plurality of images (Ri) belonging to a second input sequence (R) of images representative of a second view of said stereoscopic stream, and a second plurality of depth or disparity maps (D2i), each one associated with a respective image of said second plurality of images (Ri), wherein said first plurality of images (Li) comprises the first image (L1) of said first input sequence (L), said first plurality of maps comprises said first map (D1), said second plurality of images (Ri) comprises the second image (R2) of said second input sequence (R), and said second plurality of maps (D2i) comprises said second map (D2),
wherein each image (Li) of said first plurality is associated with a respective first time reference (TLi),
wherein each image (Ri) of said second plurality is associated with a respective second time reference (TRi), said first time references (TLi) being alternated in time with said second time references (TRi), so that the images of the first plurality (Li) are alternated in time to the images of the second plurality (Ri),
said operating module (21) being configured for:
- rebuilding images of said second input sequence (R) as a function of said first plurality of images (Li) and of said first plurality of maps (D1i), thereby obtaining corresponding first rebuilt images (Ri');
- rebuilding images of said first input sequence (L) as a function of said second plurality of images (Ri) and of said second plurality of maps (D2i), thereby obtaining corresponding second rebuilt images (Li');
said decoded video stream (DVS) comprising:
- a first output sequence (L') including said first plurality of images (Li) and said second rebuilt images (Li'), and
- a second output sequence (R') including said second plurality of images (Ri) and said first rebuilt images (Ri').

12. An apparatus according to any one of claims 9 to 11, wherein said operating module (21) is configured for:
- locating, as a function of the first image (L1) of said first input sequence (L) and of the corresponding first map (D1), one or more occluded pixels with respect to the corresponding first image (R1) of said second input sequence (R);
- determining, as a function of one or more specific images of said second input sequence (R), one or more substitution pixels to be substituted for said one or more occluded pixels in said first image (R1) of said second input sequence (R).

13. An apparatus according to claim 12, wherein said specific images belong to said second plurality of images (Ri).

14. An apparatus according to claim 12 or 13, wherein said coded video stream (CVS) comprises descriptive data relating to one or more substitution pixels,
said operating module (21) being configured for determining said one or more substitution pixels as a function of said descriptive data, wherein said descriptive data preferably comprise main data representative of substitution pixels, belonging to said second input sequence (R), which cannot be determined only as a function of an image preceding and/or an image following said first image (R1).

15. An apparatus according to claim 14, wherein said data representative of substitution pixels, and preferably said main data, comprise motion vectors associated with said occluded pixels.

16. A method for generating a video stream, comprising:
- providing a first input sequence (L) of images representative of a first view of an input stereoscopic stream;
- providing a second input sequence (R) of corresponding images representative of a second view of said input stereoscopic stream;
- providing one or more depth or disparity maps which allow, starting from one or more images of said first input sequence (L), to substantially rebuild corresponding images of said second input sequence (R);
- providing one or more depth or disparity maps which allow, starting from one or more images of said second input sequence (R), to substantially rebuild corresponding images of said first input sequence (L);
- selecting a first image (L1) of said first input sequence (L);
- selecting a first depth or disparity map (D1), so that a first image (R1) of said second input sequence (R) can be substantially rebuilt by combining the first image (L1) of said first input sequence (L) with said first map (D1);
- selecting a second image (R2) of said second input sequence (R);
- selecting a second depth or disparity map (D2), so that a second image (L2) of said first input sequence (L) can be substantially rebuilt by combining the second image (R2) of said second input sequence (R) with said second map (D2);
- outputting a coded video stream comprising at least the first image (L1) of said first input sequence (L), the first map (D1), the second image (R2) of said second input sequence (R), and the second map (D2), wherein said coded video signal (CVS) does not comprise the first image (R1) of said second input sequence (R) and the second image (L2) of said first input sequence (L).

17. A method for rebuilding a video stream, comprising:
- receiving a coded video stream (CVS) comprising at least a first image (L1) of a first input sequence (L), a first depth or disparity map (D1) associated with said first image (L1) of said first input sequence (L), a second image (R2) of a second input sequence (R), and a second depth or disparity map (D2) associated with said second image (R2) of said second input sequence (R), wherein said first map (D1) allows rebuilding a first image (R1) of said second input sequence (R) based on said first image (L1) of said first input sequence (L), wherein said second map (D2) allows rebuilding a second image (L2) of said first input sequence (L) based on said second image (R2) of said second input sequence (R), wherein said coded video stream (CVS) does not comprise the first image (R1) of said second input sequence (R) and the second image (L2) of said first input sequence (L);
- rebuilding the first image (R1) of said second input sequence (R) as a function of said first image (L1) of said first input sequence (L) and of said first map (D1), thereby obtaining a first rebuilt image (R1');
- rebuilding the second image (L2) of said first input sequence (L) as a function of said second image (R2) of said second input sequence (R) and of said second map (D2), thereby obtaining a second rebuilt image (L2');
- outputting a decoded stereoscopic video stream (DVS) comprising a first output sequence (L') including the first image (L1) of said first input sequence (L) and said second rebuilt image (L2'), and a second output sequence (R') including said first rebuilt image (R1') and the second image (R2) of said second input sequence (R),
said first and second output sequences (L', R') being representative of a first and a second views, respectively, of said decoded stereoscopic video stream (DVS).

18. A software product for generating a video stream, comprising instructions which, when executed by a computer, implement the method according to claim 16.

19. A software product for rebuilding a video stream comprising instructions which, when executed by a computer, implement the method according to claim 17.

## Patentansprüche

1. Vorrichtung zum Erzeugen eines Videostroms, umfassend:
- eine Kommunikationsschnittstelle (10) zum Empfangen eines oder mehrerer Bilder einer ersten Eingangssequenz (L) von Bildern, die repräsentativ für eine erste Ansicht eines stereoskopischen Eingangsstroms (VIN) sind; ein oder mehrere Bilder einer zweiten Eingangssequenz (R) von Bildern, die jeweils zu einem Bild der ersten Eingangssequenz (L) korrespondieren, wobei die Bilder der zweiten Eingangssequenz (R) repräsentativ für eine zweite Ansicht des stereoskopischen Eingangsstroms (VIN) sind; ein oder mehrere Tiefen- oder Disparitätskennfelder, die es erlauben, beginnend von einem oder mehreren Bildern der ersten Eingangssequenz (L) korrespondierende Bilder der zweiten Eingangssequenz (R) im Wesentlichen zu rekonstruieren; ein oder mehrere Tiefen- oder Disparitätskennfelder, die es erlauben, beginnend von einem oder mehreren Bildern der zweiten Eingangssequenz (R) korrespondierende Bilder der ersten Eingangssequenz (L) im Wesentlichen zu rekonstruieren;
- eine Verarbeitungseinheit (11), die mit der Kommunikationsschnittstelle (10) verbunden ist und eingerichtet ist zum:
Auswählen eines ersten Bildes (L1) der ersten Eingangssequenz (L);
Auswählen eines ersten Tiefen- oder Disparitätskennfeldes (D1), sodass das erste Bild (R1) der zweiten Eingangssequenz (R) durch Kombinieren des ersten Bildes (L1) der ersten Eingangssequenz (L) mit dem ersten Kennfeld (D1) im Wesentlichen rekonstruiert werden kann;
Auswählen eines zweiten Bildes (R2) der zweiten Eingangssequenz (R);
Auswählen eines zweiten Tiefen- oder Disparitätskennfeldes (D2), sodass das zweite Bild (L2) der ersten Eingangssequenz (L) durch Kombinieren des zweiten Bildes (L2) der zweiten Eingangssequenz (R) mit dem zweiten Kennfeld (D2) im Wesentlichen rekonstruiert werden kann;
Ausgeben eines kodierten Videostroms (CVS), der zumindest das erste Bild (L1) der ersten Eingangssequenz (L), das erste Kennfeld (D1), das zweite Bild (R2) der zweiten Eingangssequenz (R) und das zweite Kennfeld (D2) umfasst, wobei der kodierte Videostrom (CVS) nicht das erste Bild (R1) der zweiten Eingangssequenz (R) und das zweite Bild (L2) der ersten Eingangssequenz (L) umfasst.

2. Vorrichtung nach Anspruch 1, wobei das zweite Bild (L2) der ersten Eingangssequenz (L) und das zweite Bild (R2) der zweiten Eingangssequenz zeitlich aufeinander folgend und benachbart entsprechend zum ersten Bild (L1) der ersten Eingangssequenz (L) und zum ersten Bild (R1) der zweiten Eingangssequenz (R) sind.

3. Vorrichtung nach Anspruch 1 oder 2, wobei die Kommunikationsschnittstelle (10) eingerichtet ist, zum Empfangen:
- einer ersten Vielzahl von Bildern (Li) der ersten Eingangssequenz (L), die das erste Bild (L1) der ersten Eingangssequenz (L) umfasst, wobei jedes Bild (Li) der ersten Vielzahl jeweils mit einer ersten Zeitreferenz (TLi) assoziiert ist;
- einer zweiten Vielzahl von Bildern (Ri) der zweiten Eingangssequenz (R), die das zweite Bild (R2) der zweiten Eingangssequenz (R) umfasst, wobei jedes Bild (Ri) der zweiten Vielzahl jeweils mit einer Zeitreferenz (TRi) assoziiert ist, wobei die ersten Zeitreferenzen (TLi) mit den zweiten Zeitreferenzen (TRi) zeitlich alterniert sind, sodass die Bilder der ersten Vielzahl (Li) zu den Bildern der zweiten Vielzahl (Ri) zeitlich alterniert sind;
- einer ersten Vielzahl von Tiefen- oder Disparitätskennfeldern (DLi), wobei jedes der korrespondierenden Bilder, die zur zweiten Eingangssequenz (R) gehören, durch Kombinieren jedes Bildes der ersten Vielzahl von Bildern (Li) mit einem entsprechenden Kennfeld der ersten Vielzahl (DLi) von Kennfeldern im Wesentlichen rekonstruiert werden können;
- einer zweiten Vielzahl von Tiefen- oder Disparitätskennfeldern (D2i), wobei jedes der korrespondierenden Bilder, die zu der ersten Eingangssequenz (L) gehören, durch Kombinieren jedes Bildes der zweiten Vielzahl von Bildern (Ri) mit einem entsprechenden Kennfeld der zweiten Vielzahl (D2i) von Kennfeldern im Wesentlichen rekonstruiert werden kann;
wobei die Verarbeitungseinheit (11) eingerichtet ist, den kodierten Videostrom (CVS) durch darin Einfügen der ersten Vielzahl von Bildern (Li), der ersten Vielzahl von Kennfeldern (DLi), der zweiten Vielzahl von Bildern (Ri) und der zweiten Vielzahl von Kennfeldern (D2i), zu generieren.

4. Vorrichtung nach einem der vorhergehenden Ansprüche, wobei die Verarbeitungseinheit (11) eingerichtet ist zum:
- Auffinden eines oder mehrerer verdeckter Bildpunkte als eine Funktion des ersten Bildes (L1) der ersten Eingangssequenz (L) und des korrespondierenden ersten Kennfeldes (D1);
- Bestimmen beschreibender Daten, die auf einen oder mehrere Austauschbildpunkte zum Austauschen für die einen oder mehreren verdeckten Bildpunkte bezogen sind als eine Funktion der einen oder mehreren Bilder der zweiten Eingangssequenz (R);
- Einfügen der beschreibenden Daten in den kodierten Videostrom (CVS).

5. Vorrichtung nach Anspruch 4, wobei die Verarbeitungseinheit (11) eingerichtet ist zum:
- Auffinden spezifischer Austauschbildpunkte, die zur zweiten Eingangssequenz (R) gehören, die nicht allein als Funktion eines vorhergehenden Bildes und/oder eines folgenden Bildes des korrespondierenden Bildes (R1) definiert werden können;
- Bestimmen von Hauptdaten, die die spezifischen Austauschbildpunkte beschreiben;
- Einfügen der beschreibenden Daten in den kodierten Videostrom (CVS) durch Einfügen der Hauptdaten in den kodierten Videostrom (CVS).

6. Vorrichtung nach Anspruch 4 oder 5, wobei die Daten, die repräsentativ für die Austauschbildpunkte sind, und vorzugsweise die Hauptdaten Bewegungsvektoren, die mit den verdeckten Bildpunkten assoziiert sind, umfassen.

7. Vorrichtung nach einem der vorhergehenden Ansprüche, ferner umfassend ein Vorverarbeitungsmodul (12), das eingerichtet ist zum:
- Empfangen einer Startsequenz (R0), die eine Vielzahl von Bildern (R0i) umfasst, die repräsentativ für die zweite Ansicht des stereoskopischen Eingangsstroms sind, wobei jedes mit einem korrespondierenden Bild der ersten Eingangssequenz (L) assoziiert ist;
- Vergleichen eines oder mehrerer Bilder (R0i) der Startsequenz (R0) mit den korrespondierenden Bildern der ersten Eingangssequenz (L);
- Erzeugen eines korrespondierenden Bildes der zweiten Eingangssequenz (R) als Funktion jedes Vergleichs;
- Bereitstellen der generierten korrespondierenden Bilder der zweiten Eingangssequenz als Eingang für die Verarbeitungseinheit (11).

8. Vorrichtung nach Anspruch 7, wobei das Vorverarbeitungsmodul (12) eingerichtet ist zum:
- Bestimmen eines Tiefen- oder Disparitätskennfeldes (Di) als Funktion jedes Vergleichs zwischen dem einen oder den mehreren Bildern der Startsequenz (R0) und den korrespondierenden Bildern der ersten Eingangssequenz (L);
wobei das korrespondierende Bild der zweiten Eingangssequenz (R) als eine Funktion einer Kombination aus dem korrespondierenden Bild der ersten Sequenz (L) mit dem Kennfeld (Di) erzeugt wird.

9. Vorrichtung zum Rekonstruieren eines Videostroms umfassend:
- eine Eingangsschnittstelle (20) zum Empfangen eines kodierten Videostroms (CVS) umfassend mindestens ein erstes Bild (Li) einer ersten Eingangssequenz (L), eine erstes Tiefen- oder Disparitätskennfeld (D1), das mit dem ersten Bild (L1) der ersten Eingangssequenz (L) assoziiert ist, ein zweites Bild (R2) einer zweiten Eingangssequenz (R) und ein zweites Tiefen- oder Disparitätskennfeld (D2), das mit dem zweiten Bild (R2) der zweiten Eingangssequenz (R) assoziiert ist, wobei es das erste Kennfeld (D1) erlaubt, ein erstes Bild (R1) der zweiten Eingangssequenz (R) basierend auf dem erstem Bild (L1) der ersten Eingangssequenz (L) zu rekonstruieren, wobei es das zweite Kennfeld (D2) erlaubt, ein zweites Bild (L2) der ersten Eingangssequenz (L) basierend auf dem zweiten Bild (R2) der zweiten Eingangssequenz (R) zu rekonstruieren, wobei der kodierte Videostrom (CVS) nicht das erste Bild (R1) der zweiten Eingangssequenz (R) und das zweite Bild (L2) der ersten Eingangssequenz (L) umfasst;
- ein Betriebsmodul (21), das eingerichtet ist zum:
Rekonstruieren des ersten Bildes (R1) der zweiten Eingangssequenz (R) als eine Funktion des ersten Bildes (L1) der ersten Eingangssequenz (L) und des ersten Kennfeldes (D1), um dadurch ein erstes rekonstruiertes Bild (R1') zu erhalten;
Rekonstruieren des zweiten Bildes (L2) der ersten Eingangssequenz (L) als eine Funktion des zweiten Bildes (R2) der zweiten Eingangssequenz (R) und des zweiten Kennfeldes (D2), um dadurch ein zweites rekonstruiertes Bild (L2') zu erhalten;
Ausgeben eines dekodierten stereoskopischen Videostroms (DVS), der eine erste Ausgangssequenz (L'), die das erste Bild (L1) der ersten Eingangssequenz (L) und das zweite rekonstruierte Bild (L2') umfasst, und eine zweite Ausgangssequenz (R'), die das erste rekonstruierte Bild (R1') und das zweite Bild (R2) der zweiten Eingangssequenz (R) umfasst, umfasst,
wobei die erste und zweite Ausgangssequenz (L', R'), repräsentativ für eine entsprechende erste und zweite Ansicht des dekodierten stereoskopischen Videostroms (DVS) sind.

10. Vorrichtung nach Anspruch 9, wobei:
- in der ersten Ausgangssequenz (L') das zweite rekonstruierte Bild (L2') zeitlich aufeinanderfolgend und benachbart zum ersten Bild (L1) der ersten Eingangssequenz (L) ist;
- in der zweiten Ausgangssequenz (R') das zweite Bild (R2) der zweiten Eingangssequenz (R) zeitlich aufeinanderfolgend und benachbart zum ersten rekonstruierten Bild (R1') ist.

11. Vorrichtung nach Anspruch 9 oder 10, wobei der kodierte Videostrom (CVS) eine erste Vielzahl von Bildern (Li), die zu einer ersten Eingangssequenz (L) von Bildern gehören, die repräsentativ für eine erste Ansicht eines stereoskopischen Stroms sind, eine erste Vielzahl von Tiefen- oder Disparitätskennfeldern (DLi), die jeweils mit einem entsprechenden Bild der ersten Vielzahl von Bildern (Li) assoziiert sind, eine zweite Vielzahl von Bildern (Ri), die zu einer zweiten Eingangssequenz (R) von Bildern gehören, die repräsentativ für eine zweite Ansicht des stereoskopischen Stroms sind, und eine zweite Vielzahl von Tiefen- oder Disparitätskennfeldern (D2i), die jeweils mit einem entsprechenden Bild der zweiten Vielzahl von Bildern (Ri) assoziiert sind, umfasst, wobei die erste Vielzahl von Bildern (Li) das erste Bild (L1) der ersten Eingangssequenz (L), die erste Vielzahl von Kennfeldern, die das erste Kennfeld (D1) umfasst, die zweite Vielzahl von Bildern (Ri), die das zweite Bild (R2) der zweiten Eingangssequenz (R) umfasst, und die zweite Vielzahl von Kennfeldern (D2i), die das zweite Kennfeld (D2) umfasst, umfasst,
wobei jedes Bild (Li) der ersten Vielzahl mit einer entsprechenden ersten Zeitreferenz (TLi) assoziiert ist,
wobei jedes Bild (Ri) der zweiten Vielzahl mit einer entsprechenden zweiten Zeitreferenz (TRi) assoziiert ist, wobei die erste Zeitreferenz (TLi) mit der zweiten Zeitreferenz (TRi) zeitlich alterniert ist, so dass die Bilder der ersten Vielzahl (Li) mit den Bildern der zweiten Vielzahl (Ri) zeitlich alterniert sind,
wobei das Betriebsmodul (21) eingerichtet ist zum:
Rekonstruieren von Bildern der zweiten Eingangssequenz (R) als Funktion der ersten Vielzahl von Kennfeldern (DLi), um dadurch korrespondierende erste rekonstruierte Bilder (Ri') zu erhalten;
Rekonstruieren von Bildern der ersten Eingangssequenz (L) als Funktion der zweiten Vielzahl von Bildern (Ri) und der zweiten Vielzahl von Kennfeldern (D2i), um dadurch korrespondierende zweite rekonstruierte Bilder (Li') zu erhalten;
wobei der dekodierte Videostrom (DVS) umfasst:
- eine erste Ausgangssequenz (L'), die die erste Vielzahl von Bildern (Li) und die zweiten rekonstruierten Bilder (Li') umfasst, und
- eine zweite Ausgangssequenz (R'), die die zweite Vielzahl von Bildern (Ri) und die ersten rekonstruierten Bilder (Ri') umfasst.

12. Vorrichtung nach einem der Ansprüche 9 bis 11, wobei das Betriebsmodul (21) eingerichtet ist zum:
- Auffinden eines oder mehrerer verdeckter Bildpunkte in Bezug auf das korrespondierende erste Bild (R1) der zweiten Eingangssequenz (R) als eine Funktion des ersten Bildes (L1) der ersten Eingangssequenz (L) und des korrespondierenden ersten Kennfeldes (D1);
- Bestimmen eines oder mehrerer Austauschbildpunkte zum Austausch für die einen oder mehreren verdeckten Bildpunkte in dem ersten Bild (R1) der zweiten Eingangssequenz (R) als Funktion eines oder mehrerer spezifischer Bilder der zweiten Eingangssequenz (R).

13. Vorrichtung nach Anspruch 12, wobei die spezifischen Bilder zur zweiten Vielzahl von Bildern (Ri) gehören.

14. Vorrichtung nach Anspruch 12 oder 13, wobei der kodierte Videostrom (CVS) beschreibende Daten, die auf einen oder mehrere Austauschbildpunkte bezogen sind, umfasst,
wobei das Betriebsmodul (21) eingerichtet ist, um das eine oder die mehreren Austauschbildpunkte als eine Funktion der beschreibenden Daten zu bestimmen, wobei die beschreibenden Daten vorzugsweise Hauptdaten umfassen, die für Austauschbildpunkte repräsentativ sind, die zur zweiten Eingangssequenz (R) gehören, die nicht allein als eine Funktion des vorhergehenden und/oder folgenden Bildes zum ersten Bild (R1) bestimmt werden können.

15. Vorrichtung nach Anspruch 14, wobei die Daten, die repräsentativ für Austauschbildpunkte sind und vorzugsweise die Hauptdaten Bewegungsvektoren, die mit den verdeckten Bildpunkten assoziiert sind, umfassen.

16. Verfahren zum Generieren eines Videostroms umfassend:
- Bereitstellen einer ersten Eingangssequenz (L) von Bildern, die für eine erste Ansicht eines stereoskopischen Eingangsstroms repräsentativ sind;
- Bereitstellen einer zweiten Eingangssequenz (R) von Bildern, die für eine zweite Ansicht des stereoskopischen Eingangsstroms repräsentativ sind;
- Bereitstellen einer oder mehrerer Tiefen- oder Disparitätskennfelder, die es erlauben, beginnend von einem oder mehreren Bildern der ersten Eingangssequenz (L) korrespondierende Bilder der zweiten Eingangssequenz (R) im Wesentlichen zu rekonstruieren;
- Bereitstellen einer oder mehreren Tiefen- oder Disparitätskennfelder, die es erlauben, beginnend von einem oder mehreren Bildern der zweiten Eingangssequenz (R) korrespondierende Bilder der ersten Eingangssequenz (L) im Wesentlichen zu rekonstruieren;
- Auswählen eines ersten Bildes (L1) der ersten Eingangssequenz (L);
- Auswählen eines ersten Tiefen- oder Disparitätskennfeldes (D1), sodass ein erstes Bild (R1) der zweiten Eingangssequenz (R) durch Kombinieren des ersten Bildes (L1) der ersten Eingangssequenz (L) mit dem ersten Kennfeld (D1) im Wesentlichen rekonstruiert werden kann;
- Auswählen eines zweiten Bildes (R2) der zweiten Eingangssequenz (R);
- Auswählen eines zweiten Tiefen- oder Disparitätskennfeldes (D2), sodass ein zweites Bild (L2) der ersten Eingangssequenz (L) durch Kombinieren des zweiten Bildes (R2) der zweiten Eingangssequenz (R) mit dem zweiten Kennfeld (D2) im Wesentlichen rekonstruiert werden kann;
- Ausgeben eines kodierten Videostroms, der mindestens das erste Bild (L1) der ersten Eingangssequenz (L), das erste Kennfeld (D1), das zweite Bild (R2) der zweiten Eingangssequenz (R) und das zweite Kennfeld (D2) umfasst, wobei das kodierte Videosignal (CVS) nicht das erste Bild (R1) der zweiten Eingangssequenz (R) und das zweite Bild (L2) der ersten Eingangssequenz (L) umfasst.

17. Verfahren zum Rekonstruieren eines Videostroms, umfassend:
- Empfangen eines kodierten Videostroms (CVS) umfassend mindestens ein erstes Bild (L1) einer ersten Eingangssequenz (L), ein erstes Tiefen- oder Disparitätskennfeld (D1), das mit dem ersten Bild (L1) der ersten Eingangssequenz (L) assoziiert ist, ein zweites Bild (R2) einer zweiten Eingangssequenz (R) und eines zweiten Tiefen- oder Disparitätskennfeldes (D2), das mit dem zweiten Bild (R2) der zweiten Eingangssequenz (R) assoziiert ist, wobei das erste Kennfeld (D1) erlaubt, ein erstes Bild (R1) der zweiten Eingangssequenz (R) basierend auf dem ersten Bild (L1) der ersten Eingangssequenz (L) zu rekonstruieren, wobei das zweite Kennfeld (D2) erlaubt, ein zweites Bild (L2) der ersten Eingangssequenz (L) basierend auf dem zweiten Bild (R2) der zweiten Eingangssequenz (R) zu rekonstruieren, wobei der kodierte Videostrom (CVS) nicht das erste Bild (R1) der zweiten Eingangssequenz (R) und das zweite Bild (L2) der ersten Eingangssequenz (L) umfasst;
- Rekonstruieren des ersten Bildes (R1) der zweiten Eingangssequenz (R) als Funktion des ersten Bildes (L1) der ersten Eingangssequenz (L) und des ersten Kennfeldes (D1), um dadurch ein erstes rekonstruiertes Bild (R1') zu erhalten;
- Rekonstruieren des zweiten Bildes (L2) der ersten Eingangssequenz (L) als Funktion des zweiten Bildes (D2) der zweiten Eingangssequenz (R) und des zweiten Kennfeldes (D2), um dadurch ein zweites rekonstruiertes Bild (L2') zu erhalten;
- Ausgeben eines dekodierten stereoskopischen Videostroms (DVS), der eine erste Ausgangssequenz (L'), die das erste Bild (L1) der ersten Eingangssequenz (L) und das zweite rekonstruierte Bild (L2')umfasst, und eine zweite Ausgangssequenz (R'), die das erste rekonstruierte Bild (R1) und das zweite Bild (R2) der zweiten Eingangssequenz (R) umfasst, umfasst,
wobei die ersten und zweiten Ausgangssequenzen (L', R') repräsentativ für eine entsprechende erste und zweite Ansicht des dekodierten stereoskopischen Videostroms (DVS) sind.

18. Softwareprodukt zum Generieren eines Videostroms, umfassend Instruktionen, die, wenn sie auf einem Computer ausgeführt werden, das Verfahren nach Anspruch 16 implementieren.

19. Softwareprodukt zum Rekonstruieren eines Videostroms, umfassend Instruktionen, die, wenn sie auf einem Computer ausgeführt werden, das Verfahren nach Anspruch 17 implementieren.

## Revendications

1. Appareil de génération d'un flux de données vidéo, comprenant :
- une interface de communication (10) destinée à recevoir : une ou plusieurs images d'une première séquence d'entrée (L) d'images représentatives d'une première vue d'un flux de données stéréoscopique d'entrée (VIN) ; une ou plusieurs images d'une seconde séquence d'entrée (R) d'images, chacune correspondant à une image respective de ladite première séquence d'entrée (L), les images de ladite seconde séquence d'entrée (R) étant représentatives d'une seconde vue dudit flux de données stéréoscopique d'entrée (VIN) ; une ou plusieurs cartes de profondeur ou de disparité qui permettent, en commençant à partir d'une ou de plusieurs images de ladite première séquence d'entrée (L), de reconstruire sensiblement des images correspondantes de ladite seconde séquence d'entrée (R) ; une ou plusieurs cartes de profondeur ou de disparité qui permettent, en commençant à partir d'une ou de plusieurs images de ladite seconde séquence d'entrée (R), de reconstruire sensiblement des images correspondantes de ladite première séquence d'entrée (L) ;
- une unité de traitement (11) associée à ladite interface de communication (10) et configurée pour :
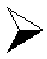 sélectionner une première image (L1) de ladite première séquence d'entrée (L) ;
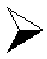 sélectionner une première carte de profondeur ou de disparité (D1), pour qu'une première image (R1) de ladite seconde séquence d'entrée (R) puisse être sensiblement reconstruite en combinant la première image (L1) de ladite première séquence d'entrée (L) avec ladite première carte (D1) ;
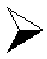 sélectionner une seconde image (R2) de ladite seconde séquence d'entrée (R) ;
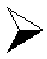 sélectionner une seconde carte de profondeur ou de disparité (D2), pour qu'une seconde image (L2) de ladite première séquence d'entrée (L) puisse être sensiblement reconstruite en combinant la seconde image (R2) de ladite seconde séquence d'entrée (R) avec ladite seconde carte (D2) ;
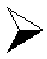 fournir en sortie un flux de données vidéo codé (CVS) comprenant au moins la première image (L1) de ladite première séquence d'entrée (L), la première carte (D1), la seconde image (R2) de ladite seconde séquence d'entrée (R) et la seconde carte (D2), ledit flux de données vidéo codé (CVS) ne comprenant pas la première image (R1) de ladite seconde séquence d'entrée (R) et la seconde image (L2) de ladite première séquence d'entrée (L).

2. Appareil selon la revendication 1, dans lequel la seconde image (L2) de ladite première séquence d'entrée (L) et la seconde image (R2) de ladite seconde séquence d'entrée sont successives et adjacentes dans le temps à la première image (L1) de ladite première séquence d'entrée (L) et à la première image (R1) de ladite seconde séquence d'entrée (R), respectivement.

3. Appareil selon la revendication 1 ou 2, dans lequel ladite interface de communication (10) est configurée pour recevoir :
- une première pluralité d'images (Li) de ladite première séquence d'entrée (L), comprenant ladite première image (L1) de ladite première séquence d'entrée (L), chaque image (Li) de ladite première pluralité étant associée à une première référence de temps (TLi) respective ;
- une seconde pluralité d'images (Ri) de ladite seconde séquence d'entrée (R), comprenant ladite seconde image (R2) de ladite seconde séquence d'entrée (R), chaque image (Ri) de ladite seconde pluralité étant associée à une seconde référence de temps (TRi) respective, lesdites premières références de temps (TLi) étant alternées dans le temps avec lesdites secondes références de temps (TRi), pour que les images de ladite première pluralité (Li) soient alternées dans le temps avec les images de la seconde pluralité (Ri) ;
- une première pluralité de cartes de profondeur ou de disparité (D1i), chacune desdites images correspondantes appartenant à ladite seconde séquence d'entrée (R) pouvant être reconstruite sensiblement en combinant chaque image de ladite première pluralité d'images (Li) avec une carte respective de ladite première pluralité (Dli) de cartes ;
- une seconde pluralité de cartes de profondeur ou de disparité (D2i), chacune desdites images correspondantes appartenant à ladite première séquence d'entrée (L) pouvant être sensiblement reconstruite sensiblement en combinant chaque image de ladite seconde pluralité d'images (Ri) avec une carte respective de ladite seconde pluralité (D2i) de cartes ;
ladite unité de traitement (11) étant configurée pour générer ledit flux de données vidéo codé (CVS) en y incorporant ladite première pluralité d'images (Li), ladite première pluralité de cartes (Dli), ladite seconde pluralité d'images (Ri) et ladite seconde pluralité de cartes (D2i).

4. Appareil selon l'une quelconque des revendications précédentes, dans lequel ladite unité de traitement (11) est configurée pour :
- localiser, en fonction de la première image (L1) de ladite première séquence d'entrée (L) et de la première carte (D1) correspondante, un ou plusieurs pixels occlus ;
- déterminer, en fonction d'une ou plusieurs images de ladite seconde séquence d'entrée (R), des données descriptives relatives à un ou plusieurs pixels de substitution devant être remplacés par lesdits un ou plusieurs pixels occlus ;
- incorporer lesdites données descriptives dans ledit flux de données vidéo codé (CVS).

5. Appareil selon la revendication 4, dans lequel ladite unité de traitement (11) est configurée pour :
- localiser des pixels de substitution spécifiques, appartenant à ladite seconde séquence d'entrée (R), qui ne peuvent pas être définis uniquement en fonction d'une image précédant et/ou d'une image suivant ladite image correspondante (R1) ;
- déterminer des données principales décrivant lesdits pixels de substitution spécifiques ;
- incorporer lesdites données descriptives dans ledit flux de données vidéo codé (CVS) en incorporant les données principales dans ledit flux de données vidéo codé (CVS).

6. Appareil selon la revendication 4 ou 5, dans lequel lesdites données représentatives de pixels de substitution, et de préférence lesdites données principales, comprennent des vecteurs de mouvement associés auxdits pixels occlus.

7. Appareil selon l'une quelconque des revendications précédentes, comprenant en outre un module de prétraitement (12) configuré pour :
- recevoir une séquence de départ (R0) comprenant une pluralité d'images (R0i) représentatives de la seconde vue dudit flux de données stéréoscopique d'entrée, chacune étant associée à une image correspondante de ladite première séquence d'entrée (L) ;
- comparer une ou plusieurs images (R0i) de ladite séquence de départ (R0) avec les images correspondantes de ladite première séquence d'entrée (L) ;
- générer, en fonction de chaque comparaison, une image correspondante de ladite seconde séquence d'entrée (R) ;
- fournir l'image correspondante générée de ladite seconde séquence d'entrée comme entrée à ladite unité de traitement (11).

8. Appareil selon la revendication 7, dans lequel ledit module de prétraitement (12) est configuré pour :
- déterminer une carte de profondeur ou de disparité (Di) en fonction de chaque comparaison entre lesdites une ou plusieurs images de ladite séquence de départ (R0) et l'image correspondante de ladite première séquence d'entrée (L) ;
- ladite image correspondante de ladite seconde séquence d'entrée (R) étant générée en fonction d'une combinaison entre ladite image correspondante de ladite première séquence d'entrée (L) et ladite carte (Di).

9. Appareil destiné à reconstruire un flux de données vidéo, comprenant :
- une interface d'entrée (20) destinée à recevoir un flux de données vidéo codé (CVS) comprenant au moins une première image (L1) d'une première séquence d'entrée (L), une première carte de profondeur ou de disparité (D1) associée à ladite première image (L1) de ladite première séquence d'entrée (L), une seconde image (R2) d'une seconde séquence d'entrée (R), et une seconde carte de profondeur ou de disparité (D2) associée à ladite seconde image (R2) de ladite seconde séquence d'entrée (R), ladite première carte (D1) permettant une reconstruction d'une première image (R1) de ladite seconde séquence d'entrée (R) en se basant sur ladite première image (L1) de ladite première séquence d'entrée (L), ladite seconde carte (D2) permettant une reconstruction d'une seconde image (L2) de ladite première séquence d'entrée (L) en se basant sur ladite seconde image (R2) de ladite seconde séquence d'entrée (R), ledit flux de données vidéo codé (CVS) ne comprenant pas la première image (R1) de ladite seconde séquence d'entrée (R) et la seconde image (L2) de ladite première séquence d'entrée (L) ;
- un module de fonctionnement (21) configuré pour :
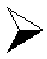 reconstruire la première image (R1) de ladite seconde séquence d'entrée (R) en fonction de ladite première image (L1) de ladite première séquence d'entrée (L) et de ladite première carte (D1), obtenant ainsi une première image reconstruite (R1') ;
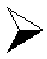 reconstruire la seconde image (L2) de ladite première séquence d'entrée (L) en fonction de ladite seconde image (R2) de ladite seconde séquence d'entrée (R) et de ladite seconde carte (D2), obtenant ainsi une seconde image reconstruite (L2') ;
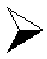 fournir en sortie un flux de données vidéo stéréoscopique décodé (DVS) comprenant une première séquence de sortie (L') incluant la première image (L1) de ladite première séquence d'entrée (L) et ladite seconde image reconstruite (L2'), et une seconde séquence de sortie (R') incluant ladite première image reconstruite (R1') et la seconde image (R2) de ladite seconde séquence d'entrée (R),
lesdites première et seconde séquences de sortie (L', R') étant représentatives d'une première et d'une seconde vue, respectivement, dudit flux de données vidéo stéréoscopique décodé (DVS).

10. Appareil selon la revendication 9, dans lequel :
- dans ladite première séquence de sortie (L'), la seconde image reconstruite (L2') est successive et adjacente dans le temps à la première image (L1) de ladite première séquence d'entrée (L) ;
- dans ladite seconde séquence de sortie (R'), la seconde image (R2) de ladite seconde séquence d'entrée (R) est successive et adjacente dans le temps à ladite première image reconstruite (R1').

11. Appareil selon la revendication 9 ou 10, dans lequel ledit flux de données vidéo codé (CVS) comprend une première pluralité d'images (Li) appartenant à une première séquence d'entrée (L) d'images représentatives d'une première vue d'un flux de données stéréoscopique, une première pluralité de cartes de profondeur ou de disparité (D1i), chacune associée à une image respective de ladite première pluralité d'images (Li), et une seconde pluralité d'images (Ri) appartenant à une seconde séquence d'entrée (R) d'images représentatives d'une seconde vue dudit flux de données stéréoscopique, et une seconde pluralité de cartes de profondeur ou de disparité (D2i), chacune associée à une image respective de ladite seconde pluralité d'images (Ri), ladite première pluralité d'images (Li) comprenant la première image (L1) de ladite première séquence d'entrée (L), ladite première pluralité de cartes comprenant ladite première carte (D1), ladite seconde pluralité d'images (Ri) comprenant la seconde image (R2) de ladite seconde séquence d'entrée (R), et ladite seconde pluralité de cartes (D2i) comprenant ladite seconde carte (D2),
dans lequel chaque image (Li) de ladite première pluralité est associée à une première référence de temps (TLi) respective,
dans lequel chaque image (Ri) de ladite seconde pluralité est associée à une seconde référence de temps (TRi) respective, lesdites premières références de temps (TLi) étant alternées dans le temps avec lesdites secondes références de temps (TRi), pour que les images de la première pluralité (Li) soient alternées dans le temps avec les images de la seconde pluralité (Ri),
ledit module de fonctionnement (21) étant configuré pour :
- reconstruire des images de ladite seconde séquence d'entrée (R) en fonction de ladite première pluralité d'images (Li) et de ladite première pluralité de cartes (D1i), obtenant ainsi des premières images reconstruites (Ri') correspondantes ;
- reconstruire des images de ladite première séquence d'entrée (L) en fonction de ladite seconde pluralité d'images (Ri) et de ladite seconde pluralité de cartes (D2i), obtenant ainsi des secondes images reconstruites (Li') correspondantes ;
ledit flux de données vidéo décodé (DVS) comprenant :
- une première séquence de sortie (L') incluant ladite première pluralité d'images (Li) et lesdites secondes images reconstruites (Li'), et
- une seconde séquence de sortie (R') incluant ladite seconde pluralité d'images (Ri) et lesdites premières images reconstruites (Ri').

12. Appareil selon l'une quelconque des revendications 9 à 11, dans lequel ledit module de fonctionnement (21) est configuré pour :
- localiser, en fonction de la première image (L1) de ladite première séquence d'entrée (L) et de la première carte (D1) correspondante, un ou plusieurs pixels occlus par rapport à la première image (R1) correspondante de ladite seconde séquence d'entrée (R) ;
- déterminer, en fonction d'une ou de plusieurs images spécifiques de ladite seconde séquence d'entrée (R), un ou plusieurs pixels de substitution devant remplacer lesdits un ou plusieurs pixels occlus dans ladite première image (R1) de ladite seconde séquence d'entrée (R).

13. Appareil selon la revendication 12, dans lequel lesdites images spécifiques appartiennent à ladite seconde pluralité d'images (Ri).

14. Appareil selon la revendication 12 ou 13, dans lequel ledit flux de données vidéo codé (CVS) comprend des données descriptives relatives à un ou plusieurs pixels de substitution,
ledit module de fonctionnement (21) étant configuré pour déterminer lesdits un ou plusieurs pixels de substitution en fonction desdites données descriptives, lesdites données descriptives comprenant de préférence des données principales représentatives de pixels de substitution, appartenant à ladite seconde séquence d'entrée (R), qui ne peuvent pas être déterminées uniquement en fonction d'une image précédant et/ou d'une image suivant ladite première image (R1).

15. Appareil selon la revendication 14, dans lequel lesdites données représentatives de pixels de substitution, et de préférence lesdites données principales, comprennent des vecteurs de mouvement associés auxdits pixels occlus.

16. Procédé de génération d'un flux de données vidéo, comprenant :
- la fourniture d'une première séquence d'entrée (L) d'images représentatives d'une première vue d'un flux de données stéréoscopique d'entrée ;
- la fourniture d'une seconde séquence d'entrée (R) d'images correspondantes représentatives d'une seconde vue dudit flux de données stéréoscopique d'entrée ;
- la fourniture d'une ou de plusieurs cartes de profondeur ou de disparité qui permettent, en commençant à partir d'une ou de plusieurs images de ladite première séquence d'entrée (L), de reconstruire sensiblement des images correspondantes de ladite seconde séquence d'entrée (R) ;
- la fourniture d'une ou de plusieurs cartes de profondeur ou de disparité qui permettent, en commençant à partir d'une ou de plusieurs images de ladite seconde séquence d'entrée (R), de reconstruire sensiblement des images correspondantes de ladite première séquence d'entrée (L) ;
- la sélection d'une première image (L1) de ladite première séquence d'entrée (L) ;
- la sélection d'une première carte de profondeur ou de disparité (D1), pour qu'une première image (R1) de ladite seconde séquence d'entrée (R) puisse être sensiblement reconstruite en combinant la première image (L1) de ladite première séquence d'entrée (L) avec ladite première carte (D1) ;
- la sélection d'une seconde image (R2) de ladite seconde séquence d'entrée (R) ;
- la sélection d'une seconde carte de profondeur ou de disparité (D2), pour qu'une seconde image (L2) de ladite première séquence d'entrée (L) puisse être sensiblement reconstruite en combinant la seconde image (R2) de ladite seconde séquence d'entrée (R) avec ladite seconde carte (D2) ;
- la fourniture en sortie d'un flux de données vidéo codé comprenant au moins la première image (L1) de ladite première séquence d'entrée (L), la première carte (D1), la seconde image (R2) de ladite seconde séquence d'entrée (R) et la seconde carte (D2), ledit signal vidéo codé (CVS) ne comprenant pas la première image (R1) de ladite seconde séquence d'entrée (R) et la seconde image (L2) de ladite première séquence d'entrée (L).

17. Procédé de reconstruction d'un flux de données vidéo, comprenant :
- la réception d'un flux de données vidéo codé (CVS) comprenant au moins une première image (L1) d'une première séquence d'entrée (L), une première carte de profondeur ou de disparité (D1) associée à ladite première image (L1) de ladite première séquence d'entrée (L), une seconde image (R2) d'une seconde séquence d'entrée (R), et une seconde carte de profondeur ou de disparité (D2) associée à ladite seconde image (R2) de ladite seconde séquence d'entrée (R), ladite première carte (D1) permettant une reconstruction d'une première image (R1) de ladite seconde séquence d'entrée (R) en se basant sur ladite première image (L1) de ladite première séquence d'entrée (L), ladite seconde carte (D2) permettant une reconstruction d'une seconde image (L2) de ladite première séquence d'entrée (L) en se basant sur ladite seconde image (R2) de ladite seconde séquence d'entrée (R), ledit flux de données vidéo codé (CVS) ne comprenant pas la première image (R1) de ladite seconde séquence d'entrée (R) et la seconde image (L2) de ladite première séquence d'entrée (L) ;
- la reconstruction de la première image (R1) de ladite seconde séquence d'entrée (R) en fonction de ladite première image (L1) de ladite première séquence d'entrée (L) et de ladite première carte (D1), obtenant de ce fait une première image reconstruite (R1') ;
- la reconstruction de la seconde image (L2) de ladite première séquence d'entrée (L) en fonction de ladite seconde image (R2) de ladite seconde séquence d'entrée (R) et de ladite seconde carte (D2), obtenant ainsi une seconde image reconstruite (L2') ;
- la fourniture en sortie d'un flux de données vidéo stéréoscopique décodé (DVS) comprenant une première séquence de sortie (L') incluant la première image (L1) de ladite première séquence d'entrée (L) et ladite seconde image reconstruite (L2'), et une seconde séquence de sortie (R') incluant ladite première image reconstruite (R1') et la seconde image (R2) de ladite seconde séquence d'entrés (R), lesdites première et seconde séquences de sortie (L', R') étant représentatives d'une première et d'une seconde vue, respectivement, dudit flux de données vidéo stéréoscopique décodé (DVS).

18. Produit logiciel pour la génération d'un flux de données vidéo, comprenant des instructions qui, lorsqu'elles sont exécutées par un ordinateur, implémentent le procédé selon la revendication 16.

19. Produit logiciel pour la reconstruction d'un flux de données vidéo comprenant des instructions qui, lorsqu'elles sont exécutées par un ordinateur, implémentent le procédé selon la revendication 17.
